# EUROPÄISCHE PATENTSCHRIFT

(11) **EP 1 850 500 B1**
(45) Veröffentlichungstag und Bekanntmachung des Hinweises auf die Patenterteilung: **28.10.2009**
(21) Anmeldenummer: 07008404.1
(22) Anmeldetag: 25.04.2007
(51) Int. Cl.: H04B 3/54

(54) **Datenerfassungs-und Steuerungssystem mit Datenübertragung über Funkstrecken und elektrische Energieverteilnetze und Verfahren hierzu**
Data recording and control system with wireless data transmission and electrical power distribution networks and method therefor
Système de saisie et de commande de données doté d'une transmission des données par émissions radio et réseaux de distribution d'énergie électrique et son procédé

(30) Priorität: 26.04.2006 DE 102006020030
(43) Veröffentlichungstag der Anmeldung: 31.10.2007
(73) Patentinhaber: iAd Gesellschaft für Informatik, Automatisierung und Datenverarbeitung mbH, 90613 Grosshabersdorf (DE)
(72) Erfinder: Hampel, Hermann, Dipl.-Ing., 90613 Grosshabersdorf (DE)
(74) Vertreter: Dreykorn-Lindner, Werner

(56) Entgegenhaltungen:
- WO-A-03/005599
- US-A1- 2003 071 719
- US-A1- 2006 018 328

## Beschreibung

Die Erfindung betrifft gemäß Patentanspruch 1 ein Datenerfassungs- und Steuerungssystem und gemäß Patentanspruch 10 ein Verfahren hierzu.

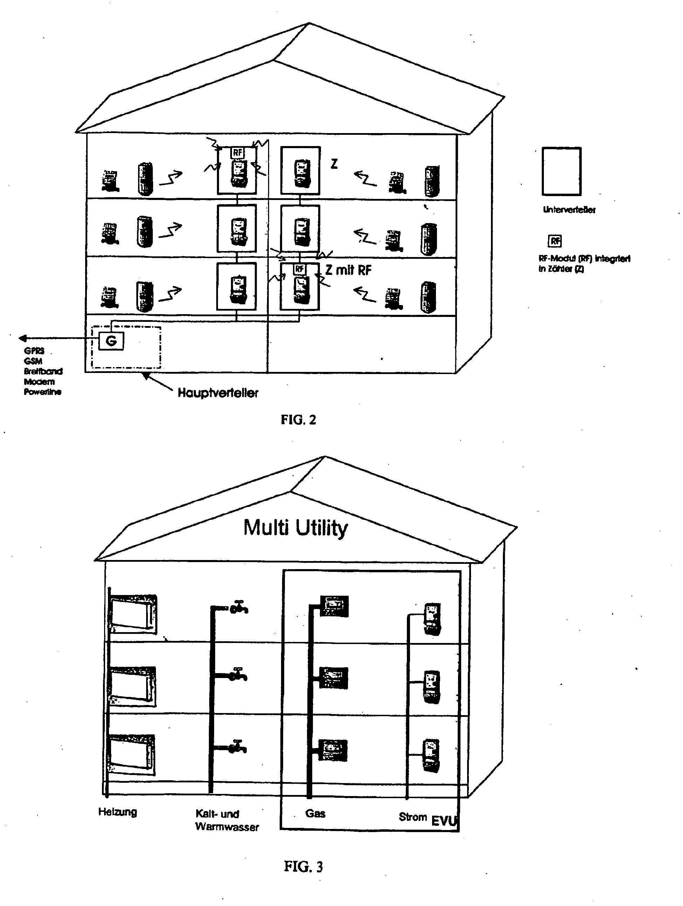

Heutzutage werden Verbrauchsdaten für verschiedene Versorgungsarten im Haushalt (Strom, Kaltwasser, Warmwasser, Wärme, Gas) an physikalisch unterschiedlichen Messstellen erfasst (siehe FIG. 3). Diese elementaren Versorgungsleistungen, die auch mit dem Begriff Multi Utility zusammengefasst werden, gleichen sich allerdings in folgenden Merkmalen:
➢ dem Bedürfnis, dass die gemessenen und geeichten Werte in der Rechnung nicht angezweifelt werden (Stichwort: Verbraucherschutz),
➢ die Übertragung der lokal angezeigten Messwerte in Form von Zahlen an eine zentrale Stelle sowie die dortige Verarbeitung,
➢ die Realisierung einer schnellen, zeit- und verbrauchsgerechten Rechnungslegung sowie die Überwachung durch ein Cash Management und
➢ dem Bedürfnis, eine einheitliche Lösung für alle Versorgungsarten zu schaffen.

Bisherige technische Entwicklungen für Messgeräte sowie Systeme für ein kombiniertes Erfassen der Verbrauchsdaten weisen bestimmte typische Schwächen und Probleme, wie fehlende Durchgängigkeit oder Einzellösungen für bestimmte Segmente, auf. Versorgungsunternehmen, etwa Energieversorgungsunternehmen oder Wasserversorgungsunternehmen, erstellen in der Regel die Verbrauchsabrechnungen auf der Basis von Zählerstandsdaten von den Kunden zugeordneten Verbrauchszählern, welche meistens in der Nähe der Verbrauchsstellen installiert sind. Verbrauchszähler können beispielsweise Gaszähler, Wasserzähler, Stromzähler, Wärmezähler, Heizkostenverteiler etc. sein, wobei die Zählerstandsdaten jeweils für zurückliegende Verbrauchsperioden ein Maß für die an der Verbrauchsstelle verbrauchte Menge angeben. In der Regel erfolgt die Erfassung der Zählerstandsdaten bzw. die Zählerablesung für ein Haus, eine Wohnung oder ggf. eine einzelne Verbrauchsstelle mindestens einmal jährlich.

Um einen in einem Haushalt zu installierenden Wasserzähler zu schaffen, der es dem Versorgungsunternehmen erlaubt, den Zählerstand sicher und mit möglichst kleinem Aufwand ohne Betreten der jeweiligen Wohnung des Endkunden abzulesen, der einfach auch im Nachrüstverfahren installierbar ist, und der eine sichere Erfassung des zu übertragenden Zählerwerts bei gleichzeitiger Gewährleistung eines störungsfreien Sendebetriebs ermöglicht, ist aus der DE 44 28 996 C2 ein Wasserzähler mit einer in einem ersten Gehäusebereich angeordneten Messeinrichtung, einer in einem zum ersten abgedichteten zweiten Gehäusebereich angeordneten, mit der Messeinrichtung zusammenwirkenden Zähl- und/oder Anzeigeeinrichtung und mit einer mit der Zähl- und/oder Anzeigeeinrichtung zusammenwirkenden, aus einer Energiequelle gespeisten funktechnischen Sendeeinrichtung zum Aussenden des Zählerstandes an ein zentrales, entfernt angeordnetes Empfangssystem bekannt. Die Sendeeinrichtung umfasst einen Sensor zur Erfassung einer, an der Zähl- und/ oder Anzeigeeinrichtung angeordneten Markierung, welche als mechanische Zähleinrichtung ausgestaltet ist. Ferner ist eine im Wasserzähler integrierte Einrichtung zur Abschirmung der funktechnischen Sendeeinrichtung vorgesehen, derart, dass diese und damit der in periodischer (beispielsweise mehrmals täglich) oder stochastischer Abfolge getätigte Sendebetrieb magnetisch nicht beeinflussbar ist. Bei einer alternativen Ausgestaltung steht die Sendeeinrichtung mit einem die elektronische Einrichtung, insbesondere eine als LCD-Einrichtung ausgebildete Zähl- und/oder Anzeigeeinrichtung, steuernden, aus einer Energiequelle gespeisten elektronischen Steuerelement - vorzugsweise einem Mikroprozessor - in Verbindung. Das separate Empfangssystem/ stationäre Empfangsgerät ist beispielsweise zentral im Flur, Keller oder dergleichen eines mehrstöckigen Mietshauses angeordnet, wo der Ablesende einfach und ohne Betreten der jeweiligen Wohnungen den Zählerstand ablesen kann. Ist das Mietshaus komplett mit derartigen Wasserzählern ausgerüstet, können alle in den verschiedenen Wohnungen angeordneten Zähler gleichzeitig am stationären Empfangsgerät abgelesen werden, ohne dass überhaupt jemand anwesend sein muss. Es reicht aus, wenn die Ableseperson Zutritt zu dem Empfangsgerät im Treppenhaus des Hauses hat. Ein weiterer Vorteil der Funkübertragung, die bei periodischem Betrieb beispielsweise jede Stunde oder pro hundert Liter erfolgt, ist die Reduzierung der Ablesefehler durch automatisch gesicherte Datenübertragung. Ferner herrscht, da ohne Aufwand in kürzeren Abständen, z. B. monatlich, abgelesen werden kann, eine größere Gerechtigkeit bei Tarif- oder Mieterwechsel. Da keinerlei zusätzlich in der Wohnung zu installierenden Elemente erforderlich sind, ist der Wasserzähler mit funktechnischer Sendeeinrichtung auch mühelos im Nachrüstverfahren installierbar, insbesondere wenn der zweite, die Zähl- und/oder Anzeigeeinrichtung und die Sendeeinrichtung und gegebenenfalls die Energiequelle und das Steuerelement tragende Gehäusebereich lösbar am ersten, die Messeinrichtung enthaltenden Gehäusebereich angeordnet ist. Die Abschirmung und auch der periodische oder stochastische Sendebetrieb gewährleisten eine sichere Übertragung.

Infolge der durch die Mehrweg-Funkausbreitung verursachten Interferenzfunklöcher wird auch für von den Verbrauchszählern gesendeten Funktelegramme in Gebäuden darauf geachtet, dass die Funksendeeinrichtung eines betreffenden Verbrauchszählers im potenziellen Empfangsbereich mindestens zweier solcher stationärer Empfänger liegt. Die Komponenten für den Funkempfang und für die Funkweiterleitung sind jedoch in Beschaffung, Montage, Inbetriebnahme und Betrieb relativ teuer, so dass sich (vor allem bei einer meist nur jährlichen Verbrauchsabrechnung) ihr Betrieb nicht aus den eingesparten Kosten für das Ablesepersonal finanzieren lässt. Bei genügend hoher Sendehäufigkeit der Verbrauchszähler kann es praktikabel sein, die Funkauslesung der Verbrauchszähler mittels mobiler Empfänger durchzuführen. Dabei hat das Ablesepersonal mit einer mobilen Funkempfangs-Datenübernahmeinrichtung eine Datenerfassungstour zu absolvieren, bei der die Funkempfangs-Datenübernahmeeinrichtung nacheinander in die Bereiche der Sendereichweiten der per Funk auszulesenden Verbrauchszähler gebracht wird. Beim sogenannten drive-by wird die mobile Funkempfangs-Datenübemahmeeinrichtung mit einem Fahrzeug langsam eine Straße entlang bewegt, an der Häuser mit zur Verbrauchsdaten-Erfassung anstehenden "funkenden" Verbrauchszählern stehen; beim sogenannten walk-by geht die die Funkempfangs-Datenübernahmeeinrichtung mitführende Person das betreffende Gebiet zu Fuß ab; beim sogenannten walk-in begeht die die mobile Funkempfangs-Datenübernahmeeinrichtung mitführende Person über das Treppenhaus alle Stockwerte des Hauses, um von sämtlichen zur Funkauslesung anstehenden Verbrauchszählern die unidirektional von den Sendeeinrichtungen der Verbrauchszähler gesandten Sendetelegramme nacheinander zu empfangen. Ein solches mobiles Verbrauchsdatenerfassungssystem und ein Verfahren zur Funkauslesung der Verbrauchszähler bei der Datenerfassungstour ist beispielsweise aus der DE 101 33 366 C2 bekannt. Im einzelnen weist das Verbrauchsdaten-erfassungssystem eine in Sendereichweite der Funkesendeeinrichtung des Verbrauchszählers zu bringende mobile Datenübernahmeeinrichtung mit einer Funkempfangseinrichtung zum Empfang der von dem betreffenden Verbrauchszähler gesendeten Daten und ein mit der Funkempfangseinrichtung in Kommunikationsverbindung stehendes, insbesondere mit der Daten-Übernahmeeinrichtung zu einer Geräteeinheit kombiniertes Mobilfunksende- und -empfangsgerät eines Mobilfunksystems auf Das Mobilfunksende- und -empfangsgerät ist dazu eingerichtet, die von einem betreffenden Verbrauchszähler mittels der Funkempfangseinrichtung übernommenen Zählerstandsdaten in Zuordnung zu den Zähleridentifikationsdaten zu einer zentralen Datenerfassungsstelle zu senden. Die gesendeten Daten werden über das Mobilfunksystem zu der zentralen Datenerfassungsstelle innerhalb eines bestimmten Zeitintervalls, das mit dem Zeitpunkt der Übernahme der Zählerstandsdaten in die Datenübernahmeeinrichtung beginnt, übertragen. Weiterhin werden Ortsinformationen, wobei die Gerätekombination aus Datenübernahmeeinrichtung und Mobilfunksende- und - empfangsgerät zusätzlich Komponenten eines Orts-Lokalisierungssystems - insbesondere GPS-Funkortungssystems - umfasst, über die Lage der Verbrauchszähler über das Mobilfunksystem von der Datenerfassungsstelle zu dem Mobilfunk-Endgerät der Datenerfassungsperson gesendet. Ein Rechner der zentralen Datenerfassungsstelle kann die Reihenfolge der zur Auslesung anstehenden Verbrauchszähler so festlegen, dass die von der Datenerfassungsperson zurück zu legenden Wege möglichst keine Umwege umfassen. Falls ein Zähler unbeabsichtigt ausgelassen wird oder wegen eines Defektes, einer Störung und dergleichen kein Signal sendet, wird dies in der zentralen Datenerfassungsstelle automatisch registriert, weil von einem solchen Zähler kein erwarteter Datensatz mit Identifikationsdaten zu der zentralen Datenerfassungsstelle gelangt. Von der zentralen Datenerfassungsstelle wird dann automatisch eine entsprechende Rückmeldung über den nicht erfassten Verbrauchszähler über das Mobilfunksystem zu der Datenerfassungsperson veranlasst. Diese kann erneut die Gerätekombination in den Bereich der Soll-Funkreichweite des ausgelassenen Verbrauchszählers führen, um durch etwaige Suche nach empfanggünstigeren Standorten eventuell doch noch ein Datentelegramm (Zählerstandsdaten, Zähleridentifikationsdaten, Ortsinformationsdaten) von dem betreffenden Verbrauchszähler zu empfangen. Funktioniert auch dies nicht, kann die Datenerfassungsperson vor Ort versuchen, Zugang zu dem Verbrauchszähler zu erhalten, um das Problem zu erkennen und möglicherweise auch gleich zu beheben. Die Sendeleistung und die Sendereichweite des so genannten Primärfunksenders ist vergleichsweise gering, es kann eine Sendereichweite von wenigen Metern ausreichen, und die Sendehäufigkeit liegt bei mehreren Funktelegrammen pro Minute, wobei die Dauer jedes Funktelegramms kurz ist und z. B. nur einige Millisekunden beträgt. Die Datenübernahmeeinrichtung enthält ferner ein Endgerät eines öffentlichen WAN-Mobilfunksystems, wobei dieses so genannte Sekundärfunk-Endgerät ein Funktelefon und/oder ein Funkmodem, insbesondere nach einem oder mehreren der Standards: GSM, SMS, GPRS, UMTS, TETRA sein kann. Die Gerätekombination kann auch noch dazu genutzt werden, die Daten neu montierter Verbrauchszähler zum Zwecke der Ergänzung der Datenbank in der zentralen Datenerfassungsstelle zu übermitteln.

In der Praxis wurde festgestellt, dass funkende Verbrauchszähler für die mobile Funkauslesung und funkende Verbrauchszähler für die stationäre Funkauslesung deutliche Unterschiede in den Anforderungen an die Funktelegrammlänge, Sendehäufigkeit und Sendeleistungen aufweisen, aber jeweils mit einer Batterie akzeptabler Größe und mit einem kleinen Pufferkondensator auskommen können. In Weiterbildung ist aus der DE 101 33 367 C2 ein universell einsetzbarer funkender Verbrauchszähler bekannt, der dazu vorbereitet ist, dass er in wenigstens zwei unterschiedlichen Sendebetriebsarten senden kann. Nämlich in einer ersten Sendebetriebsart werden Funktelegramme aussendet, die im Telegrammaufbau oder/und Sendehäufigkeit oder/und Sendeleistung für den mobilen Funkempfang (mobile Funkauslesung) optimiert sind. In einer zweiten Sendebetriebsart werden Funktelegramme aussendet, die im Telegrammaufbau oder/und Sendehäufigkeit oder/und Sendeleistung für den Empfang mit stationären Funkempfängern (stationäre Funkauslesung) optimiert sind. Dabei weist der Verbrauchszähler in der Sendebetriebsart für stationäre Funkauslesung eine Sendeleistung auf, die um wenigstens 3 Dezibel größer ist als die Sendeleistung in der Sendebetriebsart für die mobile Funkauslesung. Der Verbrauchszähler sendet in der Sendebetriebsart für mobile Funkauslesung Funktelegramme, die um wenigstens 30% länger sind als die Funktelegramme in der Sendebetriebsart für stationäre Funkauslesung. Vorzugsweise ist die größere Funktelegrammlänge, d. h. größere Datenmenge, dadurch begründet, dass Zählerstandsinformationen aus zurückliegenden Zeitpunkten zusätzlich zu den aktuellen Zählerstandsinformationen in den Funktelegrammen enthalten sind. Der Verbrauchszähler führt vollautomatisch, z. B. unter der Kontrolle eines Mikroprozessors, beide Sendebetriebsarten im Wechsel durch, so dass derselbe Zähler im periodischen oder im nicht periodischen, quasi statistischen Wechsel mit vorgebbarer relativer Häufigkeit Funktelegramme für stationäre Funkauslesung und Funktelegramme für mobile Funkauslesung sendet. Bei mehrgeschossigen Wohnhäusern ist ein Empfangsgerät (Primärfunk) mehreren, vorzugsweise allen funkenden Verbrauchszählern zugeordnet, so dass die Anschaffungs- und Installationskosten für die stationären Empfangsgeräte bei gesamtwirtschaftlicher Betrachtung durchaus akzeptabel sind, da die Verbrauchsdatenerfassung bei den Häusern kein Auslesepersonal erfordert und somit Personalkosten eingespart werden können. Im Fall eines Siedlungsgebietes mit Einfamilienhäusern wird die Funkauslesung der Zähler mit der mobilen Gerätekombination (Funkempfangsgerät und Funktelefon und/oder ein Funkmodem für den Sekundärfunk) durchgeführt. Allgemein wäre es möglich, sämtliche Verbrauchszähler mit der mobilen Gerätekombination auszulesen. Andererseits besteht die Möglichkeit, stationäre Empfänger auch in den Häusern nachträglich einzubauen, um auf stationäre Funkauslesung überzugehen, etwa weil die Anschaffungs- und Installationskosten für stationäre Funkempfänger im Verhältnis zu den Personalkosten bei der mobilen Funkauslesung so weit gesunken sind, dass die stationäre Funkauslesung auch bei den Häusern wirtschaftlich geworden ist. An den Verbrauchszählern muss bei einem solchen Wechsel der Empfangsart nichts geändert werden.

Weiterhin ist aus der DE 697 20 139 T2 ein System zum Überwachen des Wasserverbrauchs einschließlich der Energienutzung von wasserverbrauchenden Vorrichtungen und Überwachen der Energienutzung von wassergespeisten Erwärmungs- und Kühlvorrichtungen in Gebäudekomplexen mit mehreren Einheiten bekannt, bei dem bezogen auf den Nutzer (Mieter in einem Apartmenthaus) sowohl der Energieverbrauch des heißen Wassers berechnet als auch Lecks gewartet und fehlerhaft offene Leitungen geschlossen werden können. Um einerseits die Wasserwärmeenergienutzung andererseits den Zustand einer Wasserverbrauchsstruktur zu überwachen, ist neben dem Wasserzähler in jeder Leitung eine Überwachungsvorrichtung mit Wärmethermistor/Thermoelement und Mikroprozessor angeordnet, welche ein batteriebetriebenes versiegeltes Gerät ist, und es ist ein lokaler Funkempfänger vorgesehen, der die von allen Überwachungsvorrichtungen übermittelten Funksignale empfangen und dekodieren kann. Der Mikroprozessor kann auch berechnen, ob eine wasserverbrauchende Vorrichtung offengelassen wurde (z.B. eine Badewanne, die kontinuierlich läuft). Mit den lokalen Empfängern ist weiterhin ein lokaler Basisempfänger fest verdrahtet, welcher keine Daten von einer Überwachungsvorrichtung, sondern nur Daten von lokalen Empfängern empfangen kann und welcher eine Datenbank bereitstellt. Der lokale Basisempfänger kann über Telefonleitungen mit einer beliebigen Anzahl von lokalen Basisempfängern und/oder anderen entfernten Empfängern (zentrale Datenerfassung zur Erstellung von Rechnungen für Wasser-, Energie- und Abwasserkanalnutzung für jede Einheit) kommunizieren. Anstatt über Telefonleitungen oder Drähte könnten die Daten von einem lokalen Empfänger an andere lokale/entfernte (Basis)Empfänger per Funk übermittelt werden Der lokale Empfänger kann täglich, wöchentlich, monatlich, Quartalsweise, etc. Gesamtbeträge für den Volumenstrom und die Energienutzung, d. h. einen Verbrauch, für jede Einheit/Nutzer berechnen und kann bei Lecks oder offenen Wasserhähnen Alarmsignale ausgeben (z.B. durch einen hörbaren Alarm oder einen Anruf bei einer Sicherheitseinrichtung oder kommunizieren mit einem zentralen Überwachungs- oder Verrechnungssystem), die die Einheit und die wasserverbrauchende Vorrichtung abhängig von dem Alarmsignal identifizieren.

Weiterhin ist aus der US 2001/0024165 A1 der Aufbau eines Verbrauchsdaten-Übertragungsnetzes mit Kurzstreckenfunk zu einen Datenkonzentrator (LAN) bekannt. Der Verbrauchszähler ist außerhalb des Hauses in der Straße angeordnet und weist einen Mikroprozessor, eine Batterie und einen Funksender für die Verbrauchsdatenübertragung zu dem Datenkonzentrator auf, welcher z.B. an einem Laternen- / Telegrafenmast, unter Umständen mit Solarstromversorgung montiert ist. Die Datenübertragung von dem Datenkonzentrator zur zentralen Abrechnungsstelle (WAN) kann mittels Satellitenübertragung erfolgen und die Verbrauchsdaten der einzelnen Haushalte sind für diese über das Internet zugänglich.

In ähnlicher Weise ist ein aus der WO 2005/015890 bekanntes System zur Fernauslesung der Verbrauchsdaten und zum Einspielen neuer Parameter oder einer neuen Firmware in Verbrauchszähler bei Benutzung eines Übertragungsnetzwerkes mit PowerLine Communication, Konzentratoren und Funkstrecken zu einer Zentrale ausgestaltet.

Weiterhin ist aus der WO 01/48723 A1 eine Einrichtung zur Verbrauchsdatenerfassung mit Bildlesegerät in Form einer digitalen/optischen Kamera bekannt, welche den Zählerstand eines Verbrauchszählers "liest" und diesen mit Hilfe einer Optical Character Recognition (OCR) Software in einen digital speicher- und per Funk übertragbaren Wert konvertiert. Falls die Einrichtung im Funkschatten (beispielsweise im Untergrund) angeordnet ist, kann die Übertragung der Sensorsignale über die Netzleitung zu einem abgesetzten (außerhalb des Heimbereichs angeordneten) Sender erfolgen.

In ähnlicher Weise ist ein aus der WO 01/ 37535 A1 bekanntes Verbrauchsdatenerfassungssystem aufgebaut. Mittels Server mit Inhousevernetzung über PLC und Anbindung über öffentliche Kommunikationsnetze, wie Internet, kann eine Fernauslesung von Zählerständen erfolgen und in Gegenrichtung sind die Verbrauchsdaten der einzelnen Haushalte, beispielsweise über das Internet, zugänglich.

Die alternative Übertragung der Verbrauchsdaten über PLC oder Funk ist in der GB 2 310 779 A beschrieben.

Neben den vorstehend geschilderten Einrichtungen zur Verbrauchsdatenerfassung sind auch Einrichtungen zur Fernsteuerung bekannt. Beispielsweise ist aus der DE 100 42 969 C2 ein Verfahren und ein System zum Fernsteuern von einem oder mehreren Geräten bekannt, bei welchen das/die fernsteuerbare(n) Gerät(e) an ein Steuergerät angekoppelt ist/sind, eine Vielzahl von Steuergeräten über ein Intranet und/oder eine Telefonverbindung mit einem zentralen Rechner verbunden ist und der zentrale Rechner anderseits über ein öffentlich zugängliches Netz unter Verwendung eines Internetprotokolls von mindestens einem geographisch entfernten Kommunikationsendgerät zur Durchführung der Fernsteuerung erreichbar ist. Der zentrale Rechner ist für mehrere Benutzer mit unterschiedlichen Zugriffsberechtigungen vorgesehen, nimmt eine Zugriffsberechtigungsprüfung vor, vermittelt nach erfolgter Autorisierung den Zugriff des Kommunikationsendgeräts zu einem Steuergerät und/oder zu einer Teilfunktion eines Steuergeräts und führt dabei bei Bedarf die nötige Protokollübersetzung aus. Dabei werden über einen bidirektionalen Datenkanal z. B. Steuer-, Regel-, Mess-, Video- und/oder Audiodaten zwischen dem zu steuernden Gerät, und dem Kommunikationsendgerät übertragen. Dieses kann ein PC, ein tragbarer Computer, ein Telefon, ein tragbares Telefon, oder ein Kombinationsgerät aus Computer/Telefon sein. Als fernzusteuerndes Gerät kommt z. B. eine Energiemanagementanlage in Frage, und/oder Komponenten hiervon, z. B. ein Strom-, Wasser-, Fernwärme-, Öl- oder Gaszähler, dessen Zählerstand fernabgefragt wird. Dem Zähler kann eine Anzeigevorrichtung, z. B. ein LED-Display, zugeordnet sein, die den momentanen Verbrauchsstand (z. B. auf Wochen-, Monats-, oder Jahresbasis) anzeigt. Die Anzeigevorrichtung kann auch ein Rechner mit zugeordnetem oder integriertem Bildschirm sein, z. B. ein PC oder ein Laptop, oder ein Mobiltelefon. Alternativ oder zusätzlich kann die Anzeigevorrichtung (oder eine weitere Anzeigevorrichtung) den momentanen Tarif anzeigen und/oder den sich aus Tarif und Verbrauch ergebenden, vom Haushalt/Gewerbebetrieb dem Elektrizitäts-, Wasser-, bzw. Gaswerk geschuldeten Betrag. Die Anpassung des Tarifs kann ferngesteuert vom Kommunikationsendgerät und/oder zentralen Rechner aus erfolgen. Auch ist denkbar, den Zähler ferngesteuert zu kalibrieren, zu prüfen, zu warten, etc. Das fernzusteuernde Gerät kann auch ein Verkehrsüberwachungs- oder Gebäudeüberwachungsgerät sein, wobei ein z. B. von einem Bewegungs- und/oder Geräuschmelder ermittelter Alarm an das Kommunikationsendgerät weitergeleitet wird (Babyruf, Einbruchssicherung), und/ oder eine Kamera. Des weiteren kommt als fernzusteuerndes Gerät auch eine (elektronische oder mechanische) Steuereinrichtung eines Kraftfahrzeugs in Frage. Das fernzusteuernde Gerät kann auch ein Fernseher (oder ein Computer oder ein Bildschirm) sein, an den - unter Zwischenschaltung des zentralen Rechners, und des Steuergeräts - Audio- und Videodaten, insbesondere Filme übertragen werden. Dabei registriert der zentrale Rechner (oder das Kommunikationsendgerät) Abrechnungsdaten wie z. B. Tarif für den übertragenen Film, Benutzungsdauer, etc. Eine so genannte Basis- und/oder Erweiterungssoftware auf dem Steuergerät arbeitet vorzugsweise als Client mit einer entsprechenden Server-Fernsteuerungssoftware zusammen, die auf dem zentralen Rechner geladen ist. Die Server-Fernsteuerungssoftware erfüllt den überwiegenden Teil der bei der Gerätefernsteuerung anfallenden Aufgaben, z. B.

Durchführen von Autorisierungskontrollen, Anwahl des zugeordneten Steuergeräts (aus einer Vielzahl möglicher Steuergeräte), etc. Die Wartung und Aktualisierung der (wesentlichen Komponenten der) Fernsteuerungssoftware kann somit unmittelbar und zentral am o. g. Rechner erfolgen. Der zentrale Rechner überprüft die Echtheit der im System gesendeten Daten, sowie deren Vollständigkeit und Korrektheit (z. B. über Paritätsbits), und veranlasst ggf. eine Wiederholung der Datenübertragung. Jeder Vorgang wird im zentralen Rechner registriert und dokumentiert. Die genannten Funktionen Autorisierung, Echtheits-, Vollständigkeits-, Korrektheitskontrolle, Dokumentierung und Registrierung erfüllt der zentrale Rechner sowohl für vom Kommunikationsendgerät, als auch vom Steuergerät empfangene Daten. Der Datenaustausch zwischen dem zentralen Rechner und dem Kommunikationsendgerät kann drahtgebunden oder drahtlos unter Verwendung eines Internetprotokolls oder Protokollumsetzung bei verschiedenen Protokollen (Windows NT-, Linux-, Unix-Rechnernetzprotokolle, oder z. B. SMS- oder WAP-Handyprotokolle, etc) erfolgen.

Ein Verfahren zur Überwachung der Leistungsbilanz in einem Energieversorgungsnetz, vorzugsweise einem Stromversorgungsnetz, im Hinblick auf ein möglichst ausgewogenes Verhältnis zwischen in das Netz eingespeister und aus dem Netz entnommener Energie oder die Gewinnung technisch/wirtschaftlicher Kenngrößen ist aus der DE 100 09 325 A1 bekannt. Zur Überwachung der Lastverhältnisse werden für jede an das Energieversorgungsnetz angeschlossene, von einem bestimmten Energieversorger betriebene Energieversorgungseinheit und für jeden Energieabnehmer permanent die in das Netz eingespeisten oder die vom Netz abgenommenen Leistungswerte erfasst, zyklisch oder veranlasst durch ein Abfragesignal auf eine Wertänderung überprüft und zumindest bei Feststellung einer solchen Wertänderung für die jeweilige Energieversorgungseinheit oder den Energieabnehmer aktualisierte Leistungswerte über das ISDN-Netz an die nächste Vermittlungsstelle des Netzes übertragen. Von dort werden die Leistungswerte, gegebenenfalls über weitere übergeordnete Vermittlungsstellen, jeweils unter Einbeziehung der entsprechenden Daten von weiteren Energieeinspeise- oder -abnahmepunkten, an eine Anzeigeeinheit, an eine Auswerteeinheit zur Gewinnung technisch/wirtschaftlicher Kenngrößen oder an eine Steuerzentrale zur Ableitung von Steuersignalen für an selektiv bestimmten Energieversorgungseinheiten zu veranlassende Lastregelmaßnahmen weitergeleitet. In Abhängigkeit der anfallenden Datenmenge erfolgt in der Regel vor einer Weiterleitung der Leistungswerte an eine übergeordnete Vermittlungsstelle oder an die Steuerzentrale (zur Ableitung notwendiger Lastregelmaßnahmen) eine Reduktion der Datenmenge. Denkbar ist es aber auch, jedem Abnehmer bzw. jeder Energieversorgungseinheit eine virtuelle Recheneinheit zuzuordnen, die entweder auf einen oder mehreren der physischen Recheneinheiten abgebildet wird. Die Ansprache dieser virtuellen Recheneinheiten im Sinne der Zuordnung zu bestimmten Energieversorgern oder Abnehmern erfolgt dann, je nach der Art ihrer Abbildung auf den physischen Recheneinheiten, durch eine oder ein Gemisch der vorstehend erläuterten Adressierungsarten. Die Übertragung aktualisierter Daten erfolgt zumindest bei Feststellung einer Wertänderung, kann aber auch zeitperiodisch erfolgen.

Ein Verfahren zum Verteilen von Energie in einem Stromversorgungsnetz, bei dem Verbraucher vor dem Zuschalten einer Last den Stromanbieter anfragen können, ob sie die Last mit Niedertarif betreiben können, ist aus der DE 198 55 070 A1 bekannt. Abhängig von der momentanen Netzkapazität und der vom Verbraucher angegebenen Leistung, teilt der Anbieter dem Verbraucher mit, ob er die Last zum Niedertarif betreiben kann oder nicht. Hierzu ist ein bidirektionales Kommunikationsnetzwerk vorgesehen, das eine Steuerung des Anbieters mit dem beim Verbraucher angeordneten Stromzähler und der Laststeuerung verbindet. Das Kommunikationsnetzwerk kann als PLC-Netz (Power Line Carrier Netz) ausgestaltet sein, das die Netzleitungen als Übertragungsmedium verwendet.

Eine kombinierte Breitband-Funk-/PLC-Übertragung, insbesondere für die Audio-/Videodatenübertragung, von eine Zentrale (server bzw. media server (Multimediagerät)) zu PCs, Set-Top box, PVRs (personal video recorder), Fernseh- oder Audiogeräte u.a. ist in der US 2005/0047379 A1 beschrieben.

Weiterhin ist aus der US 6,538,577 B1 ein elektronischer elektrischer Zähler (Verbrauchszähler) mit zwei verschiedenen Arten von Kommunikation zwischen Verbrauchszähler und utility (Verbrauchsdatenerfassungszentrale) bekannt. Die Kommunikation mit der Verbrauchsdatenerfassungszentrale erfolgt beim indirekten Verfahren mittels zweiwegiger Funkübertragung (two-way wireless transceiver) über ein Funk-LAN (local area network mit 900 MHz, zweiwegig, Spread-Spektrum) zu einem Gateway Node (Gateway), welcher über ein zweiwegiges, kommerziell verfügbares, festes WAN (wide area network) mit der Verbrauchsdatenerfassungszentrale in Verbindung steht. Beim direkten Verfahren ist ein Netzwerkinterface (PLC modul → communication network module) vorgesehen, das auf Rückseite der Zählerplatine aufgesteckt wird. Dabei werden das LAN bzw. das Gateway überbrückt (bygepasst, da hierfür nicht nötig). Der Verbrauchszähler hat für das Entfernen und Austauschen von Schaltungsboards und Modulen innerhalb des Zählers ein modulares Design, wobei diese auf eine gemeinsame Backplane oder ein Bussystem gesteckt werden und dient zur Übertragung von Verbrauchsdaten und Stromqualität. Das Gateway ist entfernt vom Zähler angeordnet und hat vier Komponenten, nämlich WAN Interface Modul, Initialisierungs-µC, Spread-Spektrum -Prozessor und RF-Transceiver. Der Funktransceiver kann auch Verbrauchsdaten anderer Zähler, die Funktransceiver beinhalten, empfangen und an die Verbrauchsdatenerfassungszentrale weiterleiten. Beim Gegenstand der US 6,538,577 B1 findet der Austausch von Daten zwischen Verbrauchszähler und dem Gateway nur im (LAN-) Funk-Betrieb statt.

Weiterhin ist in der nicht vorveröffentlichten Anmeldung EP 1 677 270 A1 ein Verfahren zum Aufbau von AMR-Netzwerken (automatic meter reading) beschrieben, das folgende Komponenten umfasst:
- Zähler,
- Sammeleinheiten (Gathering Units) (z.B. Elektrizitätszähler oder Terminal Units),
- Konzentratoren (gewöhnlich; Industrie-PC),
und bei dem drei Typen von Verbindungen:
- LPRB (low power radio or Bluetooth),
- PLC (power line communication),
- MC (mobile connection, insbesondere über Mobiltelefon),
zur Herstellung optimaler Verbindungen in AMR-Netzwerken vorgesehen sind. Dabei wird in mindestens einer Sammeleinheit eine Konversion zwischen LPRB (am Eingang) und PLC (am Ausgang) durchgeführt.

Um auf einfache Art und Weise die Durchführung universeller Messungen und/oder Datenübertragung bei Niederspannungsnetzen unter Berücksichtigung deren nachrichtentechnischer Eigenschaften zu ermöglichen, ist aus der DE 100 50 476 B4 der Anmelderin eine Vorrichtung bekannt, bei der für den niedrigen Frequenzbereich bis einigen KHz mindestens ein mit allen drei Phasenleitern und dem Nulleiter und/oder für den höheren Frequenzbereich ein mit im 4-Segment-Kabel gegenüberliegenden Phasenleitern verbundenes und auf der Netzseite angeordnetes Ankoppelmodul, ein Entkoppelfilter mit mindestens zwei Paaren von in den Längspfad der Leiter integrierten Spulen sowie mindestens drei zwischen die Leiter geschalteten Impedanzen, ein sowohl auf der Netzseite als auch auf der Verbraucherseite angeordnetes Konditionierungsnetzwerk, bestehend aus mindestens einer zwischen zwei Leitern geschalteten Impedanz, und ein Messmodul mit mindestens einem Shunt oder Übertrager, welcher mit mindestens einem Leiter verbunden ist, vorgesehen sind. Das Gesamtmodul weist weiterhin ein mit dem Messmodul und mit mindestens einem Ankoppelmodul verbundenes DSP- und MCU-Modul und eine mit dem DSP- und MCU-Modul in Verbindung stehende Anzeigeeinrichtung sowie ein Stromversorgungsmodul auf. Das DSP-Modul bearbeitet Übertragungs-, Mess- und Überwachungsaufgaben im Timesharing-verfahren gemäß ihrer jeweiligen Priorität und das MCU-Modul nimmt die Steuerung des DSP-Moduls und die Datenverwaltung der vom DSP-Modul gelieferten Daten vor. Weiterhin kann ein Erweiterungsmodul vorgesehen werden, welches mit zwei sowohl auf der Netzseite als auch auf der Verbraucherseite angeordneten Ankoppelmoduln und dem DSP- und MCU-Modul verbunden ist. Mit dem Erweiterungsmodul entsteht ein Kommunikations-Gateway zwischen Außer- und Innerhausbereich, wobei das Gesamtsystem nicht zwei Ankoppelmodule enthalten muss. Will man beispielsweise nur einen Stromzähler realisieren, welcher die Daten zur Trafostation überträgt, so entfällt das zweite Ankoppelmodul (einschließlich Konditionierungsnetzwerk und Erweiterungsmodul). Für entsprechende Anwendungen ist die Netzkonditionierung optional, d.h. das Konditionierungsnetzwerk bzw. die Konditionierungsimpedanzen können dann entfallen. Die aus der DE 100 50 476 B4 der Anmelderin bekannte Vorrichtung vereint die Funktionen zur Kommunikation, Netzkontrolle, Netzanalyse, Messfunktion (z.B. auch zur Messung von Fehlerstrom oder Fehlerspannung) und Blindleistungssteuerung sowie Schutzfunktion (z.B. Motorschutz) in sich. Das Gesamtmodul ist damit kosteneffizient, da es Kommunikation und Netzkontrolle in einem System vereint, ermöglicht eine geringe Bauteilgröße und damit eine einfache Montage und die Integrierbarkeit am Zähler des Hausanschlusses sowie an der Trafostation, berücksichtigt die Netzsymmetrie und bietet die Möglichkeit zur Erweiterung. Schließlich kann über eine PC-Schnittstelle eine Fernabfrage bzw. -kontrolle der Messdaten und Datenübertragung mit dem DSP-Modul als Transceiver erfolgen.

Aus der US 2006/018328 A1 ist ein **HomePlug**-System bekannt, bei dem ein Gateway, das mit einem Remote Network verbunden ist, über ein powerline Netzwerk mit verschiedenen Adaptern kommuniziert, die wiederum zur Anbindung jeweils eines Geräte über verschiedene Schnittstellen, nämlich Ethernet (Adapter) oder Funk (Adapter) dienen. Das Gateway dient dabei zur Konfiguration der Kommunikation mit den drahtgebundenen Adaptern oder den wireless Adapter damit das jeweilige Gerät angeschlossen werden kann. **HomePlug** ist ein Standard für "Inhouse-Powerline" und nutzt das vorhandene Stromnetz eines Gebäudes zur Datenübertragung. **HomePlug 1.0** wird vorwiegend für Ethernet- und Audio-Übertragung eingesetzt. Das Hausnetz stellt die Infrastruktur des Datennetzes dar. In jedem Zimmer, in dem eine Steckdose angebracht ist, können Daten sowohl gesendet als auch empfangen werden. Die dafür notwendigen Adapter werden wie normale Stecker in die Steckdose gesteckt und durch ein Netzwerkkabel mit der Netzwerkkarte eines Computers oder eines anderen Geräts mit Netzwerkanschluss verbunden. Der **HomePlug-1.0**-Standard erreicht theoretisch eine Übertragung von bis zu 14 Mbit/s und eine max. Reichweite von 200-300 m innerhalb eines Stromkreises. So können mehrere Stockwerke überbrückt werden. Zum Aufbau eines Netzes sind zumindest zwei solcher Adapter nötig. Die vorhandene Netzspannung von 220 V wird mit Trägerfrequenzen von 4,5 bis 27 MHz (Homeplug) überlagert, die mit dem Nutzsignal im OFDM-Verfahren moduliert sind. Die Topologie ist eine Busstruktur, d. h. dass alle Geräte an derselben Leitung angeschlossen sind und immer nur ein Gerät senden oder empfangen kann. Die Reichweite ist auch von der Qualität der Leitungen im Haus und den Geräten bzw. den Störquellen im Stromnetz abhängig. Begrenzt wird die Reichweite durch den nächsten Stromzähler. Dessen Dämpfung der Signale ist häufig so groß, dass eine Datenübertragung darüber hinaus (z.B. in die Nachbarswohnung) kaum möglich ist. Ebenfalls problematisch ist die Verwendung von **Homeplug**-Adaptern an Verlängerungskabeln und Mehrfachsteckdosen, da diese mit flexiblen (Litzen-)Leitungen ausgestattet sind. Die hohen Trägerfrequenzen verursachen einen Skineffekt, welcher in den sehr dünnen Einzelsträngen der Leitung zu einer hohen Dämpfung führt und eine Datenübertragung meist unmöglich macht. Die **HomePlug**-Technik bietet eine Alternative zu herkömmlichen Netzwerktechniken, wie Ethernetverkabelung oder Wireless-LAN. Die Vorteile von **HomePlug** liegen in der einfachen Installation (Plug&Play), der Infrastruktur (Stromkabel und Steckdosen in beinahe jedem Raum eines Hauses oder Wohnung, es müssen keine neuen Kabel verlegt werden) und der höheren Reichweite gegenüber WLAN. Der **HomePlug**-Standard schreibt vor, dass auch die Modelle/Adapter unterschiedlicher Hersteller miteinander arbeiten können. Daher muss z. B. das interne Passwort bei allen **HomePlug-1.0-**Adaptern **"Homeplug"** lauten, damit sich auch die Geräte unterschiedlicher Hersteller sofort finden. Die Adapter werden vom Hersteller mit einem Rückstellungs-Passwort ausgeliefert, gleichzeitig ist die Rückstellungs-Passwortkonfiguration eine Sicherheits-Gefahr, da die sonstigen Adapter, die das gleiche Passwort haben, zum powerline-Netzwerk ohne Erlaubnis des autorisierten Benutzers Zutritt erhalten können, wie dies in der US 2006/018328 A1 beschrieben ist. Die bekannten Rückstellung-Paßworte der Adapter können mit einem vom Benutzer gewählten Passwort entfernt und ersetzt werden, indem dieser jeden **HomePlug-**Adapter direkt an einen Computer anschließt, der ein Softwareprogramm für den Schlüsselaustausch der **HomePlug**-Adapter hat. Beim Gegenstand der US 2006/018328 A1 erfolgt der Schlüsselaustausch der Adapter und das Spezifizieren der Protokolle für die Adapter durch das Gateway mittels jedem Adapter durch eine vom Hersteller zugewiesene Seriennummer und Media Access Control (MAC) Adressen- oder sonstige eindeutige Identifizierer/Schlüsselm wodurch die Busstruktur verlassen wird. Das Gateway und ebenso die Adapter weisen zum Schlüsselaustausch graphische Benutzerschnittstelle (GUI) sowie einen Speicher für die Schlüssel und einen Prozessor zur Abwicklung der Prozedur auf. Sobald die Schlüssel ausgetauscht werden, überträgt das Gateway eine Authentisierungs-Nachricht, die das Rückstellungs-Passwort, Seriennummer und ein Netzwerk-Passwort enthält, eingetragen vom Benutzer, zum Adapter. Der jeweilige Adapter vergleicht das Rückstellungs-Passwort und die Seriennummer, die beim Gateway einzugeben sind, mit den Fabrik-Einstellungen für das Rückstellungs-Passwort und die Seriennummer. Wenn die Passworte und die Seriennummern übereinstimmen, antwortet der jeweilige Adapter mit einer Quittung zum Gateway. Die Gateway antwortet zur Quittung mit einer Nachricht die neuen Schlüssel zu verwenden. Dementsprechend betrifft der Gegenstand der US 2006/018328 A1 ein privates Netz mit Datenverschlüsselung und kein offenes Kommunikationssystem, wobei die zur Datenverschlüsselung erforderlichen Schlüssel vom Gateway verwaltet und dementsprechend die Schlüsselzuordnung der Access Points, nämlich der drahtgebundenen Adapter oder der wireless Adapter, erfolgt und wobei der jeweilige Adapter genau einem Benutzer bzw. Gerät zugewiesen ist.

Schließlich ist aus der US 2003/071719 A1 ein Verfahren und eine Anordnung zur Ermöglichung von powerline Kommunikation im Gebäudebereich bekannt. Ein wesentlicher Punkt ist dabei die Identifizierung der/des geeigneten Punkte(s) zur Einspeisung der PLC-Signale, um eine möglichst gute Abdeckung innerhalb des kommerziell genutzten Gebäudes zu erzielen, d.h. möglichst zu allen Steckdosen. Ein solches, zentral angebrachtes Gerät (Gateway) sollte dann am besten am Service Panel des kommerziell genutzten Gebäudes angebracht werden.

Wie die vorstehende Würdigung des Standes der Technik aufzeigt, sind unterschiedlich ausgestaltete Systeme zur automatischen Verbrauchsdatenerfassung, beispielsweise Funksysteme mit einem oder mehreren stationären Empfänger oder Ablesung mit einem mobilen Empfänger, bekannt. In der Regel sind die Geräte für das Energieversorgungsunternehmen derart ausgestaltet, um Verbrauchsdaten vom Ort des Entstehens (also beim Endkunden, z.B. Heimbereich, aber auch Industrie oder Kommunen), möglichst einfach und kostengünstig zu erfassen (Ressourcenzähler z.B. Wasserzähler) und ebenfalls möglichst einfach und kostengünstig an eine Zentrale zu überträgen (Kommunikationsverfahren), wo die Verbrauchsdaten in automatisierten Abrechnungen für die oben genannten Endkunden verarbeitet werden können. Der Anwender ist immer das Energieversorgungsunternehmen, welches die Ressourcenzähler beschafft, beim Kunden einbaut, wartet, abliest; das Gleiche gilt für die Kommunikationseinrichtungen. Der Nachteil von Systemen mit stationär im Gebäude montierten Funkempfängern ist, dass die Systemkosten deutlich höher ausfallen als bei Systemen ohne stationären Empfänger. Zudem gehen bei Ausfall des Empfängers alle gespeicherten Verbrauchswerthistorien sämtlicher empfangenen Sender verloren. Um dies zu vermeiden, müssen durch weitere Empfänger kostenintensive Redundanzen für die Verbrauchsdatenübertragung per Funk hergestellt werden. Wenig Beachtung fand jedoch die Ausgestaltung von zuverlässig arbeitenden, offenen Kommunikationssystemen sowohl zur Verbrauchsdatenerfassung als auch zur Energiesteuerung. Deshalb fehlt in der Praxis ein Verbrauchsdatenerfassungs- und Energiesteuerungssystem, welches unabhängig von anderen technischen Gegebenheiten universell einsetzbar ist und welches die Möglichkeit zur nachträglichen Erweiterung bietet. Besonders bedeutsam ist dies, weil sowohl die Messgeräte herstellende Industrie als auch die Telekommunikationsindustrie als äußerst fortschrittliche, entwicklungsfreudige Industrien anzusehen sind, die schnell Verbesserungen und Vereinfachungen aufgreifen und in die Tat umsetzen.

Der Erfindung liegt die Aufgabe zugrunde, ein Datenerfassungs- und Steuerungssystem im Heimbereich derart auszugestalten, welches sowohl ein kombiniertes Erfassen von Verbrauchsdaten als auch das Durchführen von Steuerungen ermöglicht.

Diese Aufgabe wird, gemäß Patentanspruch 1, durch ein Datenerfassungs- und Steuerungssystem gelöst, welches aufweist:
- mindestens ein mit einer Antenne verbundenes Funkmodul zur Anbindung mindestens eines mit einem Funksender und/oder Funkempfänger ausgestatteten Remotemoduls eines Gerätes oder eines Verbrauchszählers über Kurzstreckenfunk,
- eine mit dem Funkmodul in Verbindung stehende Steuereinrichtung mit einem Programm- und Datenspeicher zur Zwischenspeicherung der vom Funkmodul zugeführten Daten,
- ein mit der Steuereinrichtung verbundenes Kommunikationsmodul und ein damit verbundenes erstes Ankoppelmodul zur Übertragung der zugeführten Daten über Stromversorgungsleitungen, und
- ein mit den Stromversorgungsleitungen über ein Kommunikationsmodul und ein damit verbundenes zweites Ankoppelmodul in Verbindung stehendes Kommunikationsgateway, welches am Ort eines Summen-Stromzählers angeordnet ist,
- wobei das Funkmodul im Stromzähler und/oder das Kommunikations-Gateway im Summen-Stromzähler integriert sind, so dass das Kommunikations-Gateway zusammen mit den Stromversorgungsleitungen im Haushalt ein Backbone-Netz für die Datenübertragung ausgestaltet und der Austausch von Daten zwischen Remotemodul oder Verbrauchszähler mit dem Kommunikations-Gateway im kombinierten Funk-/Powerline-Betrieb stattfindet.

Das erfindungsgemäße Datenerfassungs- und Steuerungssystem weist folgende Vorteile auf:
- transparentes Kommunikationssystem (offen für bestehende Standards),
- störsichere Datenübertragung,
- zeitnahe Kommunikation (quasi realtime),
- Lebensdauer der DLC-Produkte entspricht der von elektronischen Standardgeräten,
- Keine Hilfsenergie erforderlich (Batterie),
- Kompakte und robuste Bauweise der Produkte,
- einfache Erweiterbarkeit des Gesamtsystems um weitere Komponenten durch einfache Anbindung über bestehendes Strom-/PLC-Netz oder über PLC-/RF-Modul (Funk-PLC-Modul).

Weiterhin ist von Vorteil, dass eine redundante Erfassung/Abspeicherung der Messwerte und eine gezielte Steuerung, basierend auf diesen Messwerten, ermöglicht werden. Schließlich wird der benötigte Platzbedarf (weniger Geräte) verringert. Die Grundstruktur ist dabei das Strom-/PLC-Netz, wobei andere Geräte/Komponenten, die keine direkte Verbindung zum Strom-/PLC-Netz (beispielsweise Funksensoren oder Komponenten für Notrufsysteme, insbesondere für ältere Menschen, welche beispielsweise am Arm getragen werden) aufweisen, über das Funk-PLC-Modul dann die Daten zum Strom-/PLC-Netz weitergeben. Unter dem Stromsparaspekt kommen dabei vorzugsweise Funkstandards mit geringer Reichweite zur Anwendung, wie beispielsweise DECT, ZIGBEE (Funkstandard mit kurzer Reichweite für die Funkvernetzung von Sensoren), Bluetooth oder Konnex.

Weiterhin wird diese Aufgabe erfindungsgemäß bei einem Verfahren zur Datenübertragung in einem Datenerfassungs- und Steuerungssystem mit Funkdatenübertragung zwischen einem Funkmodul und mindestens einem weiteren mit einem Funksender und/oder Funkempfänger ausgestatteten Remotemodul eines Gerätes oder einem Verbrauchszähler, wobei das Funkmodul eine Steuereinrichtung, ein mit der Steuereinrichtung verbundenes Kommunikationsmodul und ein erstes Ankoppelmodul aufweist, und mit Stromversorgungsleitungen vom einem zweiten Ankoppelmodul zu einem Kommunikations-Gateway, welches am Ort eines Summen- Stromzählers angeordnet ist, wobei das Funkmodul im Stromzähler und/oder das Kommunikations-Gateway im Summen-Stromzähler integriert sind, nach Patentanspruch 10 gelöst, bei dem:
- zur Anbindung des Remotemoduls oder Verbrauchszählers über Kurzstreckenfunk das Funkmodul dient,
- das Kommunikations-Gateway eine Knotenfunktion übernimmt und Daten von und zu einer zentralen Mess- oder Übergabestelle überträgt,
- das Kommunikations-Gateway zusammen mit den Stromversorgungsleitungen im Haushalt ein Backbone-Netz für die Datenübertragung ausgestaltet,
- der Austausch von Daten zwischen Remotemodul oder Verbrauchszähler mit dem Kommunikations-Gateway im kombinierten Funk-/Powerline-Betrieb stattfindet und
- das Kommunikations-Gateway eine Schnittstelle für weitere Mehrwertdienstleistungen im Bereich Multi Utility, Sicherheitstechnik, Haus- und Gebäudemanagement sowie Automatisierungstechnik bis hin zu Dienstleistungen im Bereich Home Automation einschließlich der Energiesteuerung bildet.

Das erfindungsgemäße Verfahren weist den Vorteil auf, dass dieses sowohl eine zentrale Datenerfassung und Fernauslesung, d. h. Harmonisierung der Dienste aller Verbrauchsmengen zu wirtschaftlichen Konditionen, als auch eine Energiesteuerung auf der Basis von gemessenen Werten/Historie ermöglicht.

Das Datenerfassungs- und Steuerungssystem basiert auf Powerline - Datenübertragung (bestehende Infrastruktur), so dass Zählerstände über das Stromnetz im Wohngebäude an das zentral installierte Kommunikations-Gateway zeitnah weitergeleitet und von da aus ohne personellen Aufwand abgefragt werden. Neben der Erfassung des elektrischen Verbrauchs übernimmt das erfindungsgemäße Verbrauchsdatenerfassungs- und Energiesteuerungssystem die Bündelung der Kommunikation von verschiedenen Messeinrichtungen, d.h. Zählwerte von Heizkostenverteilern, Wasserzählern, etc. über eine integrierte Funklösung. Das Auslesen und das Einwirken der dargestellten Schritte erfolgt vom jeweiligen Gateway über WAN-Verbindungen (GSM, GPRS, ISDN, etc.). Eine Erweiterung des Systems auf unterschiedliche Breitband- bzw. Telekommunikationsdienste ist ohne Änderung des erfindungsgemäßen Verfahrens möglich. Über ein CPE (Customer Premises Equipment, ein flexibles IP integriertes Service-Gateway für Breitband und embedded Applikationen) können schrittweise weitere hausinternen (Computer, Telefone, Drucker, Video- und TV-Anlagen) und externe Vernetzungen (VoiceOverIP, Internet) aufgebaut werden.

Bei einer bevorzugten Ausgestaltung der Erfindung erfolgt, gemäß Patentanspruch 2, der jeweilige Netzübergang im kombinierten Funk-/Powerline-System am lokalen Minimum der Netzimpedanz.

Die Integration des Gateways in den Zähler und damit an den Ort des Impedanzminimums hat nun folgende Vorteile: beim Empfang von Datensignalen im Impedanzminimum ist die Dämpfung des Empfangssignals noch deutlich geringer als bei einer Übertragung über das Impedanzminimum hinweg und somit der Empfang wesentlich einfacher (höherer Nutzsignalanteil, höheres SNR). Beim Senden im Impedanzminimum kann durch Messung des gesendeten Signals die Eingangsimpedanz bestimmt und abhängig davon die Sendeamplitude angepasst werden.

Vorzugsweise dient, gemäß Patentanspruch 3, das Funkmodul zum Empfang der Daten eines Verbrauchszählers.

Durch die Verwendung des Funkmoduls lassen sich Änderungen und Erweiterungen des Systems kostengünstig realisieren.

Vorzugsweise ist, gemäß Patentanspruch 5, zur Trennung von Inhouse- und Außer-Haus Bereich eine Bandsperre nahe zum Kommunikations-Gateway angeordnet oder diese im Kommunikations-Gateway integriert.

Durch die Integration der Bandsperre lassen sich die Frequenzbereiche für Inhouse- und Außer-Haus-Kommunikation voneinander trennen bzw. es wird eine unabhängige Nutzung der gleichen Frequenzbereiche in beiden Bereichen ermöglicht.

Bei einer bevorzugten Ausgestaltung der Erfindung dient, gemäß Patentanspruch 6, das Kommunikations-Gateway zur Datensammlung über Funk und/oder über PLC und/oder über Twisted Pair- und/oder über Bus-Verbindungen. Weiterhin steht, gemäß Patentanspruch 7, das Kommunikations-Gateway mit einem Breitbandkommunikationsgateway in Verbindung.

Diese Ausgestaltung der Erfindung weist die Vorteile:
- Reduzierung der Dienstleistungs- und Servicekosten
- Optimierung der Strombezugs- und Abrechnungskosten
- Hohe Investitionssicherheit aufgrund des umfassenden Lösungsansatzes
- Optimale Nutzung der bestehenden Infrastruktur
- Adaption bestehender Standards
auf.

Bei einer bevorzugten Ausgestaltung der Erfindung ist, gemäß Patentanspruch 8, im Kommunikations-Gateway sowohl ein auf der Netzseite als auch auf der Verbraucherseite angeordnetes Konditionierungsnetzwerk integriert.

Diese Ausgestaltung der Erfindung weist die Vorteile auf, dass durch die Netzkonditionierung ein geglätteter Frequenzgang, eine definierte Zugangsimpedanz für Sender und Empfänger und damit auch eine Unabhängigkeit von der unbekannten Hausanschlussimpedanz und auch eine Unterdrückung der Impedanzmodulation, die eine Kanalschätzung und eine Einstellung der AGC stören würde, erreicht wird.

Vorzugsweise weist, gemäß Patentanspruch 9, das Kommunikations-Gateway mindestens einen Koppelkondensator auf, welcher sowohl zur Phasenkopplung als auch zur Einkopplung verwendet wird.

Durch die Doppelfunktion des Koppelkondensators wird eine kostengünstige Realisierung durch Einsparung zusätzlicher Bauelemente ermöglicht.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: das Prinzipschaltbild einer ersten Ausführungsform der Erfindung,
- FIG. 2: im Detail die Integration des Kommunikations-Gateways im Summenzähler,
- FIG. 3: die Verbrauchsdatenerfassung an unterschiedlichen Messstellen beim Stand der Technik,
- FIG. 4: das Prinzipschaltbild einer zweiten Ausführungsform der Erfindung,
- FIG. 5: im Detail eine erste Ausführungsform und
- FIG. 6: eine zweite Ausführungsform für die Zusatzkommunikation zur Realisierung einer Breitbandkommunikation und
- FIG. 7a, 7b: eine Ausführungsform mit Benutzung von Koppelkondensatoren zur Phasenkopplung und zur Einkopplung.

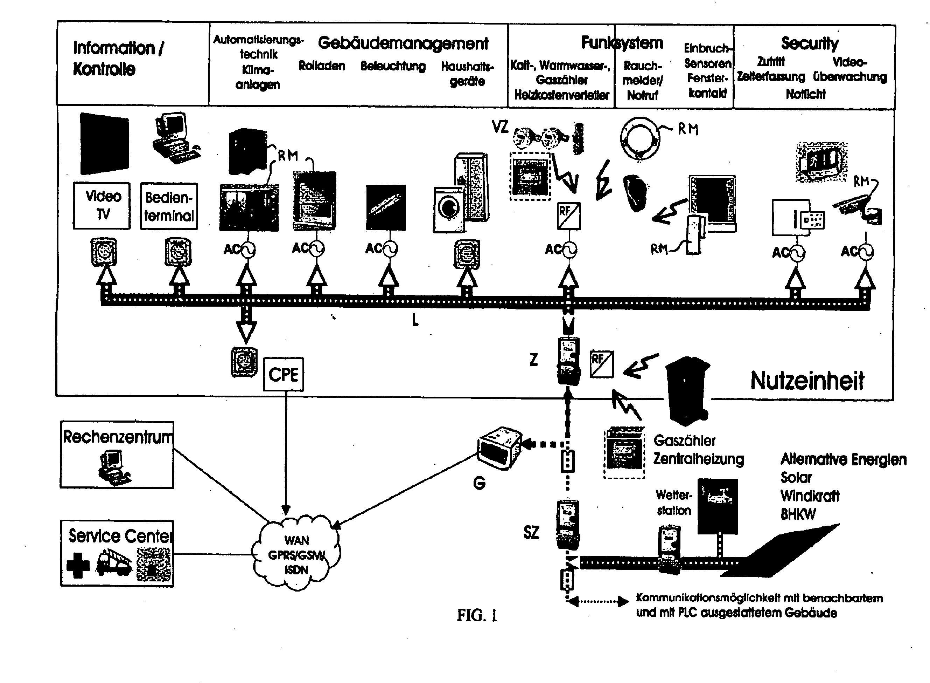

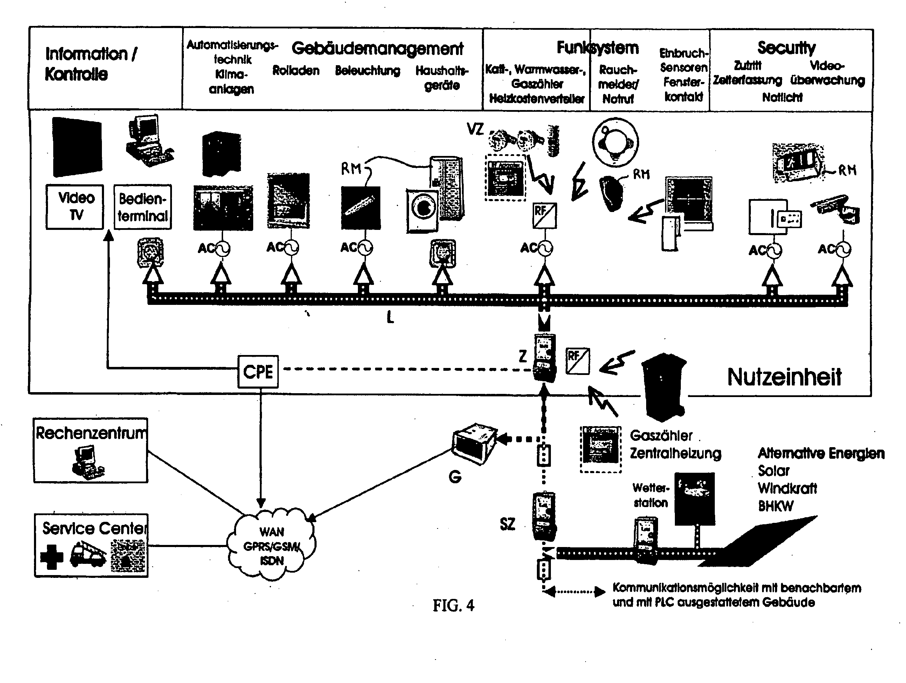

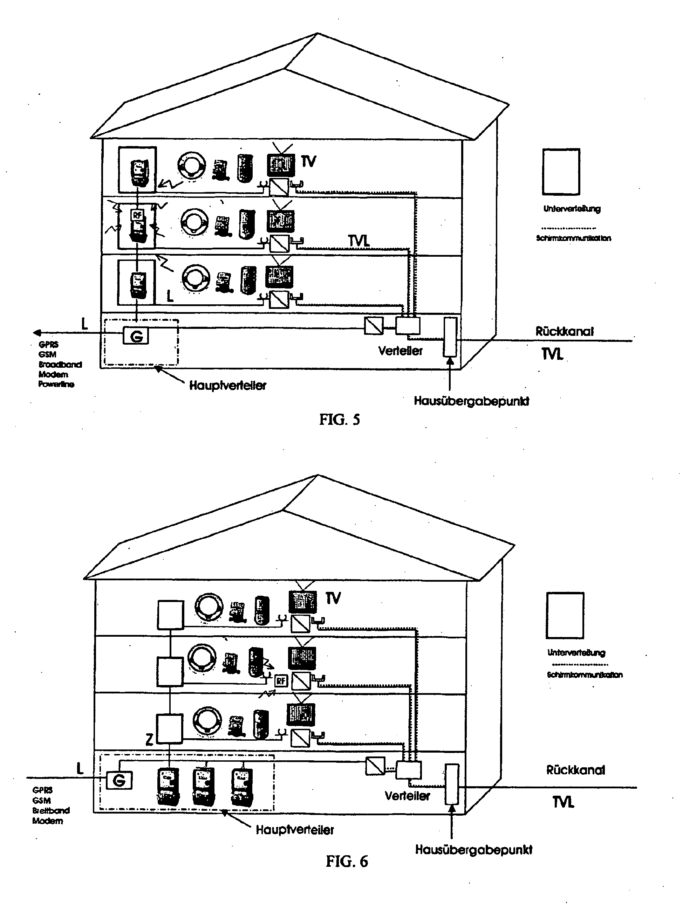

**FIG. 1** bis **FIG. 6** zeigen bevorzugte Ausführungsformen des erfindungsgemäßen Datenerfassungs- und Steuerungssystem, welches insbesondere in den Dienstleistungsbereichen Energie, Wasser, Informationstechnologie, Gebäudemanagement, Heimautomatisierung, Sicherheit, Gesundheitsüberwachung, Komfort, Verbrauchsdatenerfassung und Energiemanagement sowie Sensor-/Aktor-Vernetzung und Umwelt zum Einsatz kommt (siehe insbesondere **FIG. 1** und **FIG. 4**). Das System basiert auf Powerline- Datenübertragung (bestehende Infrastruktur), so dass Zählerstände über das Stromnetz im Wohngebäude an ein zentral installiertes Kommunikationsgateway G zeitnah weitergeleitet und von da aus ohne personellen Aufwand abgefragt werden. Neben der Erfassung des elektrischen Verbrauchs übernimmt das Datenerfassungs- und Steuerungssystem die Bündelung der Kommunikation von verschiedenen Messeinrichtungen, d.h. Zählwerte von Heizkostenverteilern, Wasserzählern, etc. über eine integrierte Funklösung, so dass die Integration aller Mess- und Versorgungsdienstleistungen in einem Kommunikationssystem für Multi Utility realisiert werden kann. Das erfindungsgemäße DLC-System der Anmelderin (**d**igital **l**ine carrier system) als Backbone bildet die Schnittstelle für weitere Mehrwertdienstleistungen im Bereich Sicherheitstechnik, Haus- und Gebäudemanagement sowie Automatisierungstechnik bis hin zu zukünftigen Dienstleistungen im Bereich Home Automation. Aufbauend auf das erfindungsgemäßen Datenerfassungs- und Steuerungssystem bildet beispielsweise die Integration eines DLC-Stromzählers je Nutzeinheit die Möglichkeit, ergänzend die Stromabrechnung zu übernehmen. Daraus ergeben sich insgesamt zahlreiche wirtschaftliche Vorteile, die sich beispielsweise in den folgenden 7 Schritten aufbauend realisieren lassen.

Zunächst wird im ersten Schritt die Anbindung des Funksystems an das DLC-System zur Auslesung und Übertragung von Verbrauchsdaten der Wasserzähler sowie der Heizkostenverteiler über die Stromleitung bis hin zu zentralen Kommunikationsgateway G vorgenommen. **FIG. 2** zeigt beispielsweise die Verteilung der RF-Module RF in den verschiedenen Stockwerken des Hauses derart, dass eine gute Abdeckung unter Berücksichtigung der kurzen Funkreichweiten erzielt wird. Vom Funk-PLC-Modul RF werden dann die Daten über das Strom-/PLC-Netz (Stromversorgungsleitung L) und das am Haus angeordnete oder im Summen-Stromzähler SZ integrierte Kommunikationsgateway G nach außen weitergeben. Im zweiten Schritt kann eine zusätzliche Anbindung von mit einem Funksender und/oder Funkempfänger ausgestatteten Remotemodulen RM eines Gerätes, beispielsweise von Brand-/Rauchmeldern an das DLC-/Funksystem erfolgen. Im dritten Schritt kann eine Integration des DLC-Stromzählers in das DLC-System zur Auslesung, Abrechnung von Verbrauchsdaten sowie Steuerung und Regelung der elektrischen Energie (Rundsteuertechnik, Tarife, etc.) erfolgen. Im vierten Schritt kann eine Anbindung von "Security"-Dienstleistungen an das System, wie z.B. Einbruchsensoren, Zutritts- und Zeiterfassungsgeräte, Videoüberwachung, etc. durchgeführt werden. Danach kann im fünften Schritt eine Erweiterung des Systems um Funktionen des Haus- und Gebäudemanagements, d.h. mit Remotemodulen RM ausgestatteten Geräten wie z.B. Rolladen- und Beleuchtungssteuerung sowie die Steuerung und Überwachung von Haushaltsgeräten (Stichwort: Home Automation; siehe **FIG. 1** oder **FIG. 4** angebunden über AC) erfolgen. Weiterhin kann im sechsten Schritt eine Anbindung zusätzlicher Funktionen der Automatisierungstechnik, wie z.B. Steuerung und Überwachung von Aufzügen und anderen elektrischen Systemen durchgeführt werden. Schließlich könnte das erfindungsgemäße Datenerfassungs- und Steuerungssystem auch unterschiedliche Funksysteme einbinden (z.B. ein Funkmodul zum Sammeln von Zählerdaten und Ansteuern von Aktoren, ein weiteres zum Empfang von Gesundheitsüberwachungsdaten von einem Armband nach einem anderen Funkstandard; beide Funkmodule oder auch nur eines könnten dabei auch ins Gateway integriert werden, eines ggf. auch über PLC oder über eine Schnittstelle ans Gateway angebunden werden. Das Auslesen und das Einwirken der dargestellten Schritte erfolgt vom jeweiligen Gateway über WAN-Verbindungen (GSM, GPRS, ISDN, etc.). Über ein CPE (siehe insbesondere **FIG. 1** und **FIG. 4**, Customer Premises Equipment, ein flexibles IP integriertes Service-Gateway für Breitband und embedded Applikationen) könnten dann die oben geschilderten Dienstleistungen mit weiteren hausinternen (Computer, Telefone, Drucker, Video- und TV-Anlagen) und externen Vernetzungen (VoiceOverIP, Internet) verbunden werden. Die Datensammlung und -Auswertung kann auch parallel in einer lokalen Einheit mit Intelligenz (z.B. PC oder im CPE) durchgeführt werden, wobei über eine Benutzerschnittstelle (z.B. PC oder TV mit spezieller Fernbedienung) eine Interaktion des Endkunden/Benutzers möglich ist. Hierdurch kann beispielsweise vom Benutzer der Leistungsverbrauch ermittelt werden oder es können Gefahrenpotentiale erkannt werden, z.B. ungewöhnlich hohe Verbrauchswerte infolge von Lecks oder offenen Wasserhähnen, oder es können Alarmsignale ausgeben werden (z.B. durch einen hörbaren Alarm oder einen Anruf bei einer Sicherheitseinrichtung oder kommunizieren mit einem zentralen Überwachungs- oder Verrechnungssystem), die die Einheit und die wasserverbrauchende Vorrichtung abhängig von dem Alarmsignal identifizieren. Im Zusammenhang mit Verbraucherschutz ist eine Datensicherheit (Verschlüsselung) ebenso möglich wie eine Zeitstempelung, beispielsweise eine automatische Zeiterfassung für Pflegepersonal. Weiterhin können durch Nutzung des Systems für verschiedenste Anwendungen kleine Datenmengen aus verschiedenen Anwendungen zur Übertragung an eine Zentrale auch gebündelt und in größeren Paketen übertragen werden (Datenreduktion). Dadurch ist dann eine bessere Kompression möglich als bei kleinen Datenpaketen. Auch eine Zusatzkommunikation über Seele oder Schirm der bestehenden Kabel-TV-Vernetzung für Datenübertragungen im Inhaus-Bereich ist möglich. Hierzu kann am hausinternen Verteiler des Kabels eine Schnittstelle zum Kommunikationsgateway G angebracht werden. Das Gateway G könnte dann hausintern alternativ oder zusätzlich zur PLC-Verbindung über die Kabel-TV-Anschlüsse mit anderen Geräten kommunizieren. Bei Übertragung im TV-Kabel selbst (also in der Kabelseele) können dabei jedoch nur Frequenzbänder außerhalb der darin bereits genutzten verwendet werden. Eine Übertragung über den Schirm (gegenüber Erde) kann nur stattfinden, wenn der Schirm auf der Strecke (d.h. innerhalb des Hauses) nicht geerdet ist. Dies kann jedoch nicht immer sichergestellt werden, da manche Anschlüsse über geerdete Anschlussdosen (in der Wohnung) zum Fernseher geführt werden.

Im Einzelnen weist erfindungsgemäß das Datenerfassungs- und Steuerungssystem mindestens ein mit einer Antenne verbundenes Funkmodul RF zur Anbindung mindestens eines weiteren mit einem Funksender und/oder Funkempfänger ausgestatteten Remotemoduls RM, eine mit dem Funkmodul RF in Verbindung stehende Steuereinrichtung mit einem Programm- und Datenspeicher zur Zwischenspeicherung der vom Funkmodul RF zugeführten Daten, ein mit der Steuereinrichtung verbundenes Kommunikationsmodul und ein damit verbundenes erstes Ankoppelmodul zur Übertragung der zugeführten Daten über Stromversorgungsleitungen L, vorzugsweise Niederspannungsleitungen, sowie ein mit den Niederspannungsleitungen L über ein Kommunikationsmodul und einem damit verbundenen zweiten Ankoppelmodul in Verbindung stehendes Kommunikations-Gateway G auf. Das Kommunikations-Gateway G ist vorzugsweise am Ort des Summen-Stromzählers SZ angeordnet und der jeweilige Netzübergang erfolgt im kombinierten Funk-/Powerline-System am lokalen Minimum der Netzimpedanz.

Das Funkmodul kann auch zum Empfang der Daten eines Verbrauchszählers VZ dienen und Funkempfänger RF ist insbesondere im Stromzähler Z und/oder das Kommunikations-Gateway G im Summen-Stromzähler SZ integriert. Zur Trennung von Inhouse- und Außer-Haus Bereich kann eine Bandsperre nahe zum Kommunikations-Gateway G angeordnet sein oder diese ist im Kommunikations-Gateway G integriert. Das Kommunikations-Gateway G kann nach außen angebunden sein über
- Herkömmliche WAN-Verbindungen (DSL, ISDN, POTS, GSM/GPRS)
- Broadband over Powerline (BOPL). in diesem Fall ist das "Gateway" eine Bridge mit integrierter Gateway-Funktionalität und vor allem hier ist eine Anbringung am Ort des Summenzählers SZ von Vorteil.

Das Kommunikations-Gateway G dient zur Datensammlung über Funk und/oder über PLC und/oder über Twisted Pair- und/oder über Bus-Verbindungen. Je nachdem, ob der Übergang zwischen Niederspannungsleitung und Mittelspannungsleitung oder zwischen Mittelspannungsleitung und Hochspannungsleitung erfolgt, weist das in der Hierarchie tiefer liegende Kommunikations-Gateway G Bridge-Funktion auf oder nicht, wobei mit letzterem vorzugsweise das Breitbandkommunikationsgateway CPE in Verbindung steht. Im Kommunikations-Gateway G ist sowohl ein auf der Netzseite als auch auf der Verbraucherseite angeordnetes Konditionierungsnetzwerk integriert. Vorzugsweise weist das Kommunikations-Gateway G mindestens einen Koppelkondensator auf, welcher sowohl zur Phasenkopplung als auch zur Einkopplung verwendet wird.

Erfindungsgemäß dienen das (die) Funkmodul RF (e) zur Anbindung von Remotes RM (z.B. Verbrauchszähler VZ) an eine/mehrere Steuereinrichtung(en) über Kurzstreckenfunk. Die Steuereinrichtung(en) kommunizieren wiederum mit dem Kommunikations-Gateway G über Powerline (Stromversorgungsleitungen L). Damit ist es auch möglich, eine Vielzahl von Remotemoduln RM anzubinden, die nicht in Funkreichweite des Gateways G stehen, ohne diese über (kosten intensive) WAN -Verbindungen direkt mit der Verbrauchsdatenerfassungszentrale verbinden zu müssen. Erfindungsgemäß bildet PLC somit das Backbonenetz zur Verbindung von Gateway G und den damit in Verbindung stehenden Remotes RM und Funkmodulen RF.

Für Unternehmen der Wohnungswirtschaft / Wohnungsunternehmen können mit dem erfindungsgemäßen Datenerfassungs- und Steuerungssystem folgende Vorteile erzielt werden:
- Reduzierung eigener Kosten (Verwaltungspauschale) durch Kauf von günstigem Strom für Verwaltungseinrichtungen,
- Reduzierung der Kosten für den Hausstrom, somit Reduzierung der Betriebskosten für die Nutzer,
- Reduzierung der Kosten für den Haushaltsstrom durch günstigere Tarife Tag-/Nachtstromnutzung, zeitnahe Abrechnung für die Nutzer und für sich selbst wegen taggenauer Ablesung sowie geringerer Ablese- und Abrechnungskosten (Messpreis),
- Somit die Möglichkeit eines wirtschaftlichen Gesamtmietangebots,
- Zusatzerträge aus Stromvertrags-/Nutzerhandhabung und Zusatzleistungen aus Healthy, Einbruch und Security sowie Gebäudemanagement.

Für Unternehmen der Wärmemesstechnik können unter Einbindung des DLC-Systems diese ihre Dienstleistung für die Kunden erweitern und dabei folgenden Mehrwert generieren:
- Erweiterung/Optimierung des Angebotsscopes und damit zusätzliche Stabilisierung und Vertiefung der Kundenbeziehung,
- Mehrwertangebot mit geringem zusätzlichen Kostenaufwand für:
   - Rauchmelder,
   - Healthy,
   - Einbruch und Security,
- Erhöhung der Umsätze und Ergebnisse je Kunden/NE,
- Genereller Wettbewerbsvorteil,
- Auslesung der Heizkostenverteiler/Volumenstromzähler quasi zum Nulltarif.

Bei der Energieversorgung berechnen Energieversorgungsunternehmen (EVU) für folgende Dienste bisher Kosten gegenüber ihren Kunden und Abnehmern:
- Strombeschaffung und -erzeugung,
- die Stromlieferung durch das Hochspannungsnetz,
- die Stromlieferung durch das Mittelspannungsnetz,
- die Stromlieferung durch das Niederspannungsnetz,
- Mietgebühren für Stromzähler,
- Kosten für das Auslesen der Zähler und Erstellen der Rechnung.

Mit dem Einsatz des erfindungsgemäßen Datenerfassungs- und Steuerungssystem haben die EVUs die Möglichkeit, zusätzliche messbare Vorteile zu erzielen:
- Schaffung einer Kundenbeziehung zu Unternehmen der Wohnungswirtschaft sowie Nutzer,
- Erweiterung/Optimierung des Angebotsscopes und damit zusätzliche Stabilisierung und Vertiefung der Kundenbeziehung,
- Mehrwertangebot mit geringem zusätzlichen Kostenaufwand für:
   - Rauchmelder,
   - Healthy,
   - Einbruch und Security,
- Erhöhung der Umsätze und Ergebnisse je Kunde und Nutzer/Kunde,
- Absicherung gegen Fremdanbieter im Rahmen der Liberalisierung,
- Taggenaue Auslesung und zeitnahe Abrechnung (Erfüllung der EU-Vorgabe).

Das erfindungsgemäße Datenerfassungs- und Steuerungssystem
- vereint in einem System die Energiedienste von regionaler Bedeutung,
   - Überwachung und -steuerung von Netzstationen,
   - Automatische Nachführung,
   - Kurzschluss- / Erdschlusssuche,
   - Automatische Verbrauchs- / Leistungserfassung von Industrie-, Gewerbe- und Bündelkunden,
   - (Rund)Steuerung für Tarifumschaltung, öffentliche Beleuchtung und Lastmanagement bei Verbrauchern.
- übernimmt Dienste der Gesamtversorgung (Multi Utility)
   - automatische Verbrauchserfassung (Gas, Wasser, Fernwärme),
   - Überwachung von Pumpstationen, Steuerung von Stellantrieben,
   - Erfassung von Störungen.
- verschafft zusätzliche Mehrwertdienste und eröffnet neue Geschäftsfelder für regionale Versorger
   - Bewirtschaftung von Parkplätzen,
   - Sicherheitsdienste für öffentliche Einrichtungen mittels Videoüberwachung mit lokaler Intelligenz,
   - Verkehrsüberwachung,
   - Automatenüberwachung (z.B. für Fahrkarten).
- ermöglicht Serviceleistungen für Kunden
   - Überwachungsdienste für Privatkunden,
   - Fernwartung von Kundenanlagen,
   - Energie- / Lastmanagement für Gebäudekomplexe.

Die dabei gesammelten Daten werden zu verschiedenen Zwecken eingesetzt:
- In Bezug auf den Endkunden:
   - Überwachung des Leistungs- und Energieverbrauchs,
   - gezielte Steuerung des Energiebedarfs mit dem Ziel, die Lastspitzen zu minimieren (Beispiel: Klimaanlagen, Kühltruhen in Supermarktketten) -> Vorteil: günstigere Konditionen beim Energieversorger,
   - Überwachung der Prozesse (z.B. zur Feststellung/Behebung unerwünschter Lastschwankungen); Vorteil: Grundlage für Prozessoptimierung vorhanden, weniger Produktionsfehler, geringerer Produktionsausschuss,
   - Beratung durch Service Company im Hinblick auf mögliche Verbesserungen/Optimierungen.
- In Bezug auf den Energieversorger:
   - dienen als Grundlage für die Abrechnung des Energieverbrauchs beim Stromversorger (wie Zählerfernauslesung) -> Vorteil: genaue Abrechnungsdaten schnell verfügbar, kein Ablesen vor Ort mehr nötig.
- In Bezug auf den Equipment Provider:
   - Überwachung des Arbeitsgeräts -> schnelle Erkennung von Fehlern, Defekten, etc., schnelle Erkennung von erforderlicher Wartung, Vereinfachung der Fehlersuche, ermöglicht auch Erstellung von Statistiken für Maschinen/Geräte/etc. und gibt damit Ansatzpunkte für mögliche Optimierungen,
   - Erstellung einer Datenbank von Prozessdaten z.B. zu Analysezwecken.

Das erfindungsgemäße Datenerfassungs- und Steuerungssystem (insbesondere über das PLC-Netzwerk) ermöglicht ein zentrales Hochladen von neuen Funktionen, z.B. neue Tarifwechselzeiten, die Realisierung von Routerfunktionen oder eine funkbasierte Fernauslesung von Haushaltzählern in Kombination mit Zugang zum persönlichen Stromverbrauch auf einer Website, wodurch die Stromrechnungen der privaten Haushalte signifikant gesenkt werden kann.

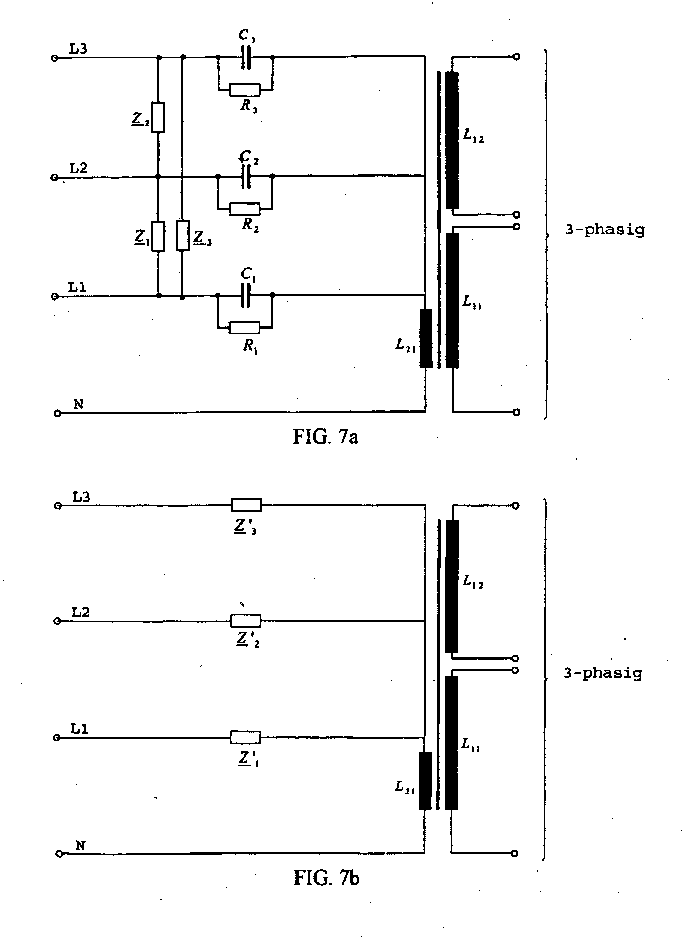

**FIG. 7a** zeigt die Einkopplung im Kommunikations-Gateway G für eine Ausführungsform ohne Zusammenführung und **FIG. 7b** die Ausführungsform mit Zusammenführung, d.h. dass ggf. Kondensatoren, die für die Einkopplung dienen (siehe **FIG. 7a****:** C1, C2, C3) mit Kondensatoren in den Konditionierungsimpedanzen (siehe **FIG. 7b****:** Z1', Z2', Z3') zusammengeführt werden können. Diese Zusammenführung kann durch eine Dreiecks-Stern-Transformation vorgenommen werden. Demzufolge können die Konditionierungsimpedanzen, die in einer Dreiecksschaltung vorliegen (zwischen Leitern L1, L2 und L3), in eine Sternschaltung überführt werden und dadurch mit den Kapazitäten der Einkopplung, die bereits in einer Sternschaltung (gemeinsamer Punkt ist die für alle drei Leiter verwendete Übertragerinduktivität) vorliegen, zusammengeführt werden. Dabei entfallen die Zweige der in Dreiecksschaltung vorliegenden Konditionierungsimpedanzen, dafür werden die Einkoppelkapazitäten (bzw. allgemein die Einkoppelimpedanzen) in den Längspfaden neu dimensioniert. Bei aktiver Einspeisung in alle drei Leiter ist das Verhalten der umgewandelten Schaltung (annähernd) gemäß **FIG. 7b** identisch mit der Originalschaltung. Eine exakte Umwandlung ist generell nicht gegeben, da der Sternpunkt im vorliegenden Fall noch eine zusätzliche (4.) Verbindung zur Übertragerinduktivität hat. Solange jedoch die Einkopplung auf allen drei Phasen identisch ist - und daher die Einkoppelkapazitäten und Konditionierungsimpedanzen symmetrisch sind - ergibt sich ein (annähernd) identisches Verhalten. Lediglich bei anderer Art der Einspeisung ändert sich das Verhalten in der Schaltung. Speist man beispielsweise nur in Leiter L1 ein und will die Kopplung der Leiter L1, L2 und L3 untereinander nutzen, so ist dies mit der geänderten Schaltung nicht mehr sinnvoll möglich, da sich die Kopplung der Leiter L1, L2 und L3 geändert hat.

## Patentansprüche

1. Datenerfassungs- und Steuerungssystem, welches aufweist:
• mindestens ein mit einer Antenne verbundenes Funkmodul (RF) zur Anbindung mindestens eines mit einem Funksender und/oder Funkempfänger ausgestatteten Remotemoduls (RM) eines Gerätes oder eines Verbrauchszählers (VZ) über Kurzstreckenfunk,
• eine mit dem Funkmodul (RF) in Verbindung stehende Steuereinrichtung mit einem Programm- und Datenspeicher zur Zwischenspeicherung der vom Funkmodul (RF) zugeführten Daten,
• ein mit der Steuereinrichtung verbundenes Kommunikationsmodul und ein damit verbundenes erstes Ankoppelmodul zur Übertragung der zugeführten Daten über Stromversorgungsleitungen (L), und
• ein mit den Stromversorgungsleitungen (L) über ein Kommunikationsmodul und ein damit verbundenes zweites Ankoppelmodul in Verbindung stehendes Kommunikationsgateway (G), welches am Ort eines Summen-Stromzählers (SZ) angeordnet ist,
• wobei das Funkmodul (RF) im Stromzähler (Z) und/oder das Kommunikations-Gateway (G) im Summen-Stromzähler (SZ) integriert sind, so dass das Kommunikations-Gateway (G) zusammen mit den Stromversorgungsleitungen (L) im Haushalt ein Backbone-Netz für die Datenübertragung ausgestaltet und der Austausch von Daten zwischen Remotemodul (RM) oder Verbrauchszähler (VZ) mit dem Kommunikations-Gateway (G) im kombinierten Funk-/Powerline-Betrieb stattfindet.

2. Verbrauchsdatenerfassungs- und Energiesteuerungssystem nach Anspruch 1, **dadurch gekennzeichnet, dass** der jeweilige Netzübergang im kombinierten Funk-/Powerline-System am lokalen Minimum der Netzimpedanz erfolgt.

3. Verbrauchsdatenerfassungs- und Energiesteuerungssystem nach Anspruch 1, **dadurch gekennzeichnet, dass** das Funkmodul zum Empfang der Daten eines Verbrauchszählers (VZ) dient.

4. Datenerfassungs- und Steuerungssystem nach Anspruch 1, **dadurch gekennzeichnet, dass** das Kommunikations-Gateway (G) im Außer-Haus Bereich über herkömmliche WAN-Verbindungen (DSL, ISDN, POTS, GSM/GPRS) oder über Broadband over Powerline (BOPL) angebunden ist.

5. Verbrauchsdatenerfassungs- und Energiesteuerungssystem nach Anspruch 1, **dadurch gekennzeichnet, dass** zur Trennung von Inhouse- und Außer-Haus Bereich eine Bandsperre nahe zum Kommunikations-Gateway (G) angeordnet oder diese im Kommunikations-Gateway (G) integriert ist.

6. Verbrauchsdatenerfassungs- und Energiesteuerungssystem nach Anspruch 1, **dadurch gekennzeichnet, dass** das Kommunikations-Gateway (G) zur Datensammlung über Funk und/oder über PLC und/oder über Twisted Pair- und/oder über Bus-Verbindungen dient.

7. Verbrauchsdatenerfassungs- und Energiesteuerungssystem nach Anspruch 1, **dadurch gekennzeichnet, dass** mit dem Kommunikations-Gateway (G) ein Breitbandkommunikationsgateway (CPE) in Verbindung steht.

8. Verbrauchsdatenerfassungs- und Energiesteuerungssystem nach Anspruch 1, **dadurch gekennzeichnet, dass** im Kommunikations-Gateway (G) sowohl ein auf der Netzseite als auch auf der Verbraucherseite angeordnetes Konditionierungsnetzwerk integriert ist.

9. Verbrauchsdatenerfassungs- und Energiesteuerungssystem nach Anspruch 1, **dadurch gekennzeichnet, dass** das Kommunikations-Gateway (G) mindestens einen Koppelkondensator aufweist, welcher sowohl zur Phasenkopplung als auch zur Einkopplung verwendet wird.

10. Verfahren zur Datenübertragung in einem Datenerfassungs- und Steuerungssystem mit Funkdatenübertragung zwischen einem Funkmodul (RF) und mindestens einem weiteren mit einem Funksender und/oder Funkempfänger ausgestatteten Remotemodul (RM) eines Gerätes oder einem Verbrauchszähler (VZ), wobei das Funkmodul (RF) eine Steuereinrichtung, ein mit der Steuereinrichtung verbundenes Kommunikationsmodul und ein erstes Ankoppelmodul aufweist, und mit Stromversorgungsleitungen (L) von einem zweiten Ankoppelmodul zu einem Kommunikations-Gateway (G), welches am Ort eines Summen-Stromzählers (SZ) angeordnet ist, wobei das Funkmodul (RF) im Stromzähler (Z) und/oder das Kommunikations-Gateway (G) im Summen-Stromzähler (SZ) integriert sind, bei dem:
• zur Anbindung der Remotemodule (RM) oder Verbrauchszähler (VZ) über Kurzstreckenfunk das Funkmodul (RF) dient,
• das Kommunikations-Gateway (G) eine Knotenfunktion übernimmt und Daten von und zu einer zentralen Mess- oder Übergabestelle überträgt,
• das Kommunikations-Gateway (G) zusammen mit den Stromversorgungsleitungen (L) im Haushalt ein Backbone-Netz für die Datenübertragung ausgestaltet,
• der Austausch von Daten zwischen Remotemodul (RM) oder Verbrauchszählern (VZ mit dem Kommunikations-Gateway (G) im kombinierten Funk-/Powerline-Betrieb stattfindet und
• das Kommunikations-Gateway (G) eine Schnittstelle für weitere Mehrwertdienstleistungen im Bereich Multi Utility, Sicherheitstechnik, Hausund Gebäudemanagement sowie Automatisierungstechnik bis hin zu Dienstleistungen im Bereich Home Automation einschließlich der Energiesteuerung bildet.

11. Verfahren nach Anspruch 10, **dadurch gekennzeichnet, dass** zur Zusatzkommunikation über Seele oder Schirm einer bestehenden Kabel-TV-Vemetzung für Datenübertragungen im Inhaus-Bereich am hausinternen Verteiler des Kabels eine Schnittstelle zum Kommunikationsgateway (G) angebracht ist und dass das Kommunikationsgateway (G) hausintern alternativ oder zusätzlich zur PLC-Verbindung über die Kabel-TV-Anschlüsse mit anderen Geräten kommuniziert.

12. Verfahren nach Anspruch 10 oder 11, **dadurch gekennzeichnet, dass** über ein flexibles IP integriertes Service-Gateway für Breitband und embedded Applikationen (CPE) eine weitere hausinterne (Computer, Telefone, Drucker, Video- und TV-Anlagen) und externe Vernetzung (VoiceOverIP, Internet) erfolgt.

13. Verfahren nach Anspruch 10, **dadurch gekennzeichnet, dass** das Verbrauchsdatenerfassungs- und Energiesteuerungssystem sowohl eine zentrale Datenerfassung und Fernauslesung einschließlich Harmonisierung der Dienste aller Verbrauchsmengen zu wirtschaftlichen Konditionen, als auch eine Energiesteuerung auf der Basis von gemessener Werten/Historie durchführt.

14. Verfahren nach Anspruch 10, **dadurch gekennzeichnet, dass** das Verbrauchsdatenerfassungs- und Energiesteuerungssystem kleine Datenmengen aus verschiedenen Anwendungen zur Übertragung an eine Zentrale bündelt und in größeren Paketen überträgt (Datenreduktion), wodurch eine bessere Kompression als bei kleinen Datenpaketen möglich ist.

15. Verfahren nach Anspruch 10, **dadurch gekennzeichnet, dass** das Verbrauchsdatenerfassungs- und Energiesteuerungssystem die Energiedienste
- Überwachung und -steuerung von Netzstationen,
- Automatische Nachführung,
- Kurzschluss- / Erdschlusssuche,
- Automatische Verbrauchs- / Leistungserfassung von Industrie-, Gewerbe- und Bündelkunden,
- (Rund)Steuerung für Tarifumschaltung, öffentliche Beleuchtung und Lastmanagement bei Verbrauchern vereinigt
und Dienste der Gesamtversorgung (Multi Utility)
- automatische Verbrauchserfassung (Gas, Wasser, Fernwärme),
- Überwachung von Pumpstationen, Steuerung von Stellantrieben und
- Erfassung von Störungen übernimmt.

## Claims

1. System for collecting and managing of data, comprising:
• at least a radio module (RF) connected to an antenna for connection with at least a remote module (RM) of a device or consumption meter (VZ) equipped with a radio transmitter and/or radio-receiver for short-range radio,
• a control device connectable to said radio module (RF) and comprising a program and data memory for interim storage of data received from said radio module (RF),
• a communication module connected with said control device and connected to it a first coupling module for the transmission of data supplied by power supply lines (L) and
• a communication gateway (G) connected by a communication module and a second coupling module with said power supply lines (L), said communication gateway (G) is disposed where a sum current meter (SZ) is located,
whereas said radio module (RF) is integrated in a current meter (Z) and/or said communication gateway (G) is integrated in said sum current meter (SZ), so that said communication gateway (G), together with said power supply lines (L) form a backbone-network for data transmission in a household and
whereas data exchange between said remote module (RM) or said consumption meter (VZ) with said communication gateway (G) is implemented in a combined radio-/powerline-mode of operation.

2. System for collection of consumption data and energy management according to claim 1, wherein a network gateway of said combined radio-/powerline-system takes place at the local minimum of network impedance.

3. System for collection of consumption data and energy management according to claim 1, wherein said radio module is used for receiving data of a consumption meter (VZ).

4. System for collection of consumption data and energy management according to claim 1, wherein said communication gateway (G) is connected in outdoor direction by existing WAN-connections (DSL, ISDN, POTS, GSM / GPRS) or by Broadband over Powerline (BOPL).

5. System for collection of consumption data and energy management according to claim 1, wherein for the separation of indoor and outdoor, a bandstop filter is placed close to said communication gateway (G) or is integrated in said the communication gateway (G).

6. System for collection of consumption data and energy management according to claim 1, wherein said communication gateway (G) is used for data collection by radio and/or PLC and/or Twisted Pair and/or bus-connection.

7. System for collection of consumption data and energy management according to claim 1, wherein said communication gateway (G) is connectable to a broadband communication gateway (CPE).

8. System for collection of consumption data and energy management according to claim 1, wherein a conditioning network is integrated in said in the communication gateway (G) at the network side as well at the consumer side.

9. System for collection of consumption data and energy management according to claim 1, wherein the communication gateway (G) has at least one coupling capacitor to be used both for phase coupling and connectivity.

10. Method for data transmission in a data recording and control system comprising radio transmission of data between a radio-module (RF) and at least one remote module (RM) of a device or consumption meter (VZ) equipped with a radio transmitter and/or radio receiver, whereas said radio module (RF) has a control device, a communication module connected to the control device, and a first coupling module and comprising power supply lines (L) from a second coupling module to a communication gateway (G), which is arranged at the place of a sum current meter (SZ), whereas said radio module (RF) is integrated in a power meter (Z) and/or said communication gateway (G) is integrated in said sum current meter (SZ), wherein:
• for connection said remote module (RM) or said consumption meter (VZ) over short range radio transmission said radio module (RF) is used,
• said communication gateway (G) has node function and transfers data from and to a central measurement device or take over point,
• said communication gateway (G) together with said power supply lines (L) form a backbone-network for data transmission in a household,
• data exchange between said remote module (RM) or said consumption meters (VZ) and said communication gateway (G) is implemented in a combined radio-/powerline-mode of operation and
• said communication gateway (G) forms an interface for additional services in the field of multi-utility, security equipment, management of households and buildings and automation technolgy as well as in the field of services, home automation, including energy management.

11. Method according to claim 10, wherein for additional communication via cable or insulating sheath of an existing cable or television network for data transmission indoor of a house, at the indoor distributor of said cable an interface to said communication gateway (G) is placed, and wherein said communication gateway (G) communicates indoor the house communicates with other devices alternatively or additional over to PLC-connections via cable-TV links.

12. Method according to claim 10 or 11, wherein using a dynamic IP-integrated service gateway for broadband and embedded applications (CPE) a further connection to an internal network (computers, phones, printers, video and TV
- systems) and an external network (VoiceOverIP, Internet) is carried out.

13. Method according to claim 10, wherein said data recording and control system performs both central data collection and remote reading, including harmonization of services of all consumption levels at economic conditions, as well as energy management on the basis of measured values/history.

14. Method according to claim 10, wherein said data recording and control system "binds" small amounts of data from diverse applications for transfering to said central station and transmits them at larger packages (reduction of the data), which allows for better compression compared to small packets of data.

15. Method according to claim 10, wherein said data recording and control system combines energy services, namely
- monitoring and management of network stations
- automatic adjustment
- search for short circuit and ground
- automatic collection of consumption data and services for industrial, commercial and individual customers
- overall management of shifting tariffs, public lighting and load management for consumer
and also undertakes services of overall coverage (multi utility)
- automatic metering of consumption (gas, water, heat)
- monitoring of pumping stations, control of actuators,
- detecting of violations.

## Revendications

1. Système de collection de données et de commande, lequel présente:
• Au moins un module de radiotransmission (RF) connecté à une antenne pour la connexion au moins d'un module de télétransmission (RM) équipé d'un émetteur et/ou d'un récepteur par radiotransmission à courte distance, d'un appareil ou d'un compteur de consommation (VZ),
• Un dispositif de commande avec une mémoire de données et programmes étant en connexion avec le module de radiotransmission (RF) pour une mémorisation intermédiaire des données venant du module de radiotransmission (RF),
• Un module de communication étant connecté au dispositif de commande et étant connecté à un premier module de couplage pour la transmission des données reçues par les conduites d'alimentation électrique (L),
• Une interface de communication (G) étant connecté à des conduites d'alimentation électrique (L) par un module de communication et un deuxième module de couplage connecté, laquelle est située au niveau d'un compteur de courant totalisateur (SZ),
où le module de radiotransmission (RF) sont intégré dans le compteur de courant (Z) et/ou l'interface de communication (G) est intégrés dans le compteur de courant totalisateur (SZ) de sorte que l'interface de communication (G) forme ensemble avec les conduites d'alimentation électrique (L) dans un foyer un réseau Backbone pour la transmission de données et l'échange des données a lieu entre le module de télétransmission (RM) ou le compteur de consommation (VZ) avec l'interface de communication (G) en service combiné de radiotransmission et de transmission par conduites électriques.

2. Système de collection de données de consommation et système de commande d'énergie selon revendication 1, **caractérisé en ce que** la passerelle de réseau en service combiné de radiotransmission et de transmission par conduites électriques a lieu au minimum local de l'impédance de réseau.

3. Système de collection de données de consommation et système de commande d'énergie selon revendication 1, **caractérisé en ce que** le module de radiotransmission sert du réception des données du compteur de consommation (VZ).

4. Système de collection de données de consommation et système de commande d'énergie selon revendication 1, **caractérisé en ce que** l'interface de communication (G) est connecté en dehors des bâtiments par des connexions traditionnelles WAN ( ( DSL, ADSL, POTS, GMS/GPRS ) ou par Broadband over Powerline ( BOPL).

5. Système de collection de données de consommation et système de commande d'énergie selon revendication 1, **caractérisé en ce qu'**on utilise pour la séparation des domaines intérieurs et extérieures de bâtiments un filtre-bande étant situé dans la proximité de l'interface de communication (G) ou étant intégré dans l'interface de communication (G).

6. Système de collection de données de consommation et système de commande d'énergie selon revendication 1, **caractérisé en ce que** l'interface de communication (G) sert de collection de données par radiotransmission et/ou par PLC et/ou par paire torsadée et/ou par Bus de données.

7. Système de collection de données de consommation et système de commande d'énergie selon revendication 1, **caractérisé en ce qu'**un interface de communication de large bande (CPE) communique à l'interface de communication (G).

8. Système de collection de données de consommation et système de commande d'énergie selon revendication 1, **caractérisé en ce qu'**un réseau de conditionnement est intégré dans l'interface de communication (G) non seulement coté réseau mais aussi coté consommateur.

9. Système de collection de données de consommation et système de commande d'énergie selon revendication 1, **caractérisé en ce que** l'interface de communication (G) possède au moins un condensateur de liaison, lequel sert non seulement de couplage de phases mais aussi de découplage.

10. Procédé pour la transmission de données dans un système de collection de données et de commande avec une radiotransmission de données entre un module de radiotransmission (RF) et au moins d'un autre module de télétransmission (RM) d'un appareil ou d'un compteur de consommation (VZ) équipé d'un émetteur et/ou d'un récepteur, où le module de radiotransmission (RF) possède un dispositif de commande, un module de communication étant connecté avec le dispositif de commande et un premier module de couplage et des conduites d'alimentation électrique (L) d'un deuxième module de couplage á un interface de communication (G), étant située à l'endroit du compteur de courant totalisateur (SZ), où le module de radiotransmission (RF) est intégré dans le compteur de courant (Z) et/ou l'interface de communication (G) est intégrée dans le compteur de courant totalisateur (SZ), où :
• Le module de radiotransmission (RM) sert de liaison du module de télétransmission (RM) ou du compteur de consommation (VZ) à l'aide de la radiotransmission à courte distance,
• L'interface de communication (G) a la fonction de noeud de communication et transmet les données de et vers les lieux de mesures ou de transfert centraux,
• L'interface de communication (G) ensemble avec les conduites d'alimentation électrique (L) dans un foyer ont la forme d'un réseau Backbone pour le transfert de données,
• L'échange de données entre le module de télétransmission (RM) ou les compteurs de consommation (VZ) et l'interface de communication (G) a lieu en service combiné de radiotransmission et de transmission par conduites électriques,
• L'interface de communication (G) forme une interface servant d'autres services payables dans le domaines de Multi Utility, de technique de sécurité, de management de maisons et de bâtiments ainsi qu'en automation jusqu'au services dans le domaine d'automation domestique y compris la commande d'énergie.

11. Procédé selon revendication 10, **caractérisé en ce qu'**une interface pour l'interface de communication (G) est établie pour une communication complémentaire par l'assemblage des conducteurs et l'écran d'un réseau existant pour la télévision par câble pour la transmission de données à l'intérieur d'un bâtiment au niveau du distributeur des câbles et la communication de l'interface de communication (G) à l'intérieur de bâtiment peut être effectuée alternativement ou complémentairement par la liaison PLC à l'aide des connexions de câbles de télévision avec d'autres appareils.

12. Procédé selon revendications 10 et 11, **caractérisé en ce qu'**à l'aide d'une interface de service flexible et IP intégrée pour larges bandes et applications fixes (CPE) d'autres interconnexions intérieurs (Microordinateurs, Téléphones, Imprimantes, appareils vidéo et de télévision) et extérieures (VoiceOverIP, Internet) sont effectuées.

13. Procédé selon revendication 10, **caractérisé en ce que** le système de collection de données de consommation et système de commande d'énergie réalise non seulement une acquisition centrale et acquisition á distance y compris d'une harmonisation des services de toutes les quantités de consommation sous des conditions économiques mais aussi une commande d'énergie sur la base des valeurs/historie mesurées.

14. Procédé selon revendication 10, **caractérisé en ce que** le système de collection de données de consommation et système de commande d'énergie concentre des petites quantités de données de différentes applications pour une transmission à une centrale et les transmet en forme des paquets plus grands (Réduction de données), par lesquels une meilleure compression par rapport de petits paquets de données est possible.

15. Procédé selon revendication 10, **caractérisé en ce que** le système de collection de données de consommation et système de commande d'énergie réunit les services d'énergie suivants chez le consommateur :
- Surveillance et commande des stations de réseau,
- Poursuite automatique,
- Recherche de court circuits/contact à la terre,
- Mesure automatique de consommation et de puissance des clients d'industrie, d'artisanat et de groupes de clients,
- Commande de commutation de tarifes, éclairage publique et management de charges de consommateurs,
et des services de distribution générale (Multi Utility)
- Mesure automatique de consommation (gaz, eau, énergie thermique par distance),
- Surveillance des stations á pompage, commande des servomoteurs et
- Mesure de perturbations.
